# EUROPÄISCHE PATENTSCHRIFT

(11) **EP 2 359 668 B1**
(45) Veröffentlichungstag und Bekanntmachung des Hinweises auf die Patenterteilung: **15.06.2016**
(21) Anmeldenummer: 09774905.5
(22) Anmeldetag: 14.12.2009
(51) Int. Cl.: H05B 33/08

(54) **OPTOELEKTRONISCHE VORRICHTUNG**
OPTOELECTRONIC DEVICE
DISPOSITIF OPTOÉLECTRONIQUE

(30) Priorität: 19.12.2008 DE 102008064149
(43) Veröffentlichungstag der Anmeldung: 24.08.2011
(73) Patentinhaber: Osram Opto Semiconductors Gmbh, 93055 Regensburg (DE)
(72) Erfinder: WIRTH, Ralph, 93098 Mintraching - Auhof (DE); KLEIN, Markus, 93105 Tegernheim (DE)
(74) Vertreter: Epping - Hermann - Fischer
(86) Internationale Anmeldenummer: PCT/EP2009/067108
(87) Internationale Veröffentlichungsnummer: WO 2010/069933

(56) Entgegenhaltungen:
- US-A1- 2005 040 774
- US-A1- 2007 040 512
- US-A1- 2008 215 279

## Beschreibung

Es wird eine optoelektronische Vorrichtung zur Abstrahlung eines Mischlichts angegeben.

Die Druckschrift US 2007/0040512 A1 offenbart eine optoelektronische Vorrichtung.

Diese Patentanmeldung beansprucht die Priorität der deutschen Patentanmeldung 102008064149.9, deren Offenbarungsgehalt hiermit durch Rückbezug aufgenommen wird.

Zur Erzeugung von Mischlicht, also von nichtmonochromatischem Licht und hierbei beispielsweise weißem Licht, werden unter Verwendung von lichtemittierenden Dioden (LEDs) üblicherweise verschiedenfarbig emittierende LEDs und/oder mehrere Leuchtstoffe eingesetzt. Um beispielsweise weißes Licht zu erzeugen, können spektrale Komponenten im gelb-grünen und im roten Wellenlängenbereich überlagert werden, die von verschiedenen LEDs abgestrahlt werden. Herausfordernd ist hier allerdings neben der Erfüllung optischer Vorgaben wie etwa der Mischung und räumlichen Überlagerung von Licht, das von verschiedenen LED-Chips emittiert wird, auch die Stabilisierung des Farborts der Mischlichts, etwa bei weißem Licht des Weißpunkts, gegenüber der Temperatur. Dies liegt beispielsweise an verschiedenen Temperaturabhängigkeiten der beteiligten Chip-Technologien. Ferner können auch unterschiedliche Alterungsverhalten und Stromdichteverhalten der LED-Chips zu einer Veränderung des Farborts und/oder der Intensität des Mischlichts führen. Die Steuerung und Regelung auf einen beliebigen Farbort ist dabei üblicherweise nur unter Verwendung von zumindest drei verschiedenen LEDs möglich, etwa zur Erzeugung von weißem Mischlicht durch eine gelb-grün, eine rot und zusätzlich ein blau emittierende LED.

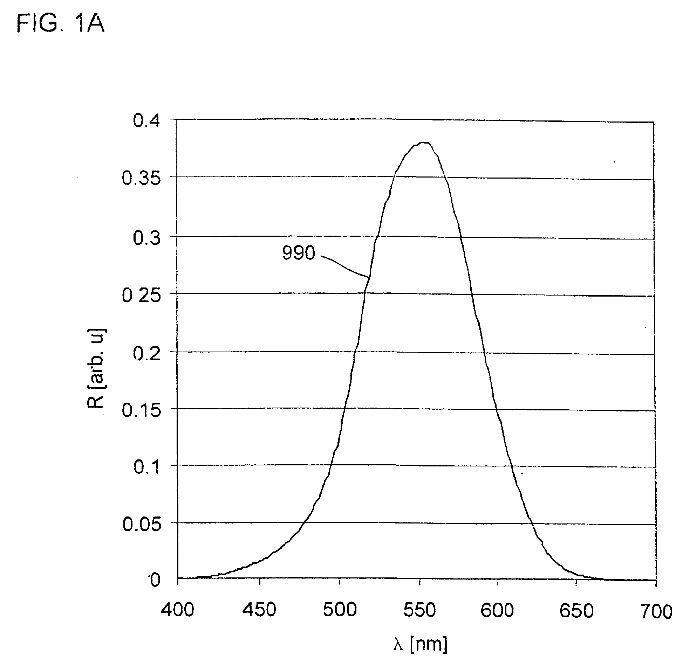

Die Wahrnehmung der Lichts durch einen Betrachter hängt weiterhin bekanntermaßen von der Empfindlichkeit des menschlichen Auges in Abhängigkeit von der wahrgenommenen Wellenlänge ab. Die durchschnittliche spektrale Empfindlichkeit des menschlichen Auges beim durchschnittlichen farbnormalsichtigen Betrachter wird durch die bekannte so genannte V_{λ}-Kurve wiedergegeben, die in Figur 1A die spektrale Empfindlichkeit R des menschlichen Auges in beliebigen Einheiten in Abhängigkeit von der Wellenlänge λ im einem Wellenlängenbereich von 400 bis 700 Nanometer zeigt. Aus der V_{λ}-Kurve 990 in Figur 1A ist ersichtlich, dass Lichtreize, die durch gleichstarke Lichtströme mit unterschiedlichen Wellenlängen hervorgerufen werden, zu unterschiedlichen Helligkeitseindrücken führen. Dieser Effekt kann insbesondere bei Mischlichtquellen mit LEDs einen erheblichen Einfluss auf den Farb- und Leuchteindruck des wahrgenommenen Mischlichts haben, wenn eine oder mehrere LEDs beispielsweise eine temperaturabhängige und/oder alterungsbedingte Wellenlängenverschiebung des abgestrahlten Lichts aufweisen.

Zumindest eine Aufgabe von bestimmten Ausführungsformen ist es, eine optoelektronische Vorrichtung zur Abstrahlung von Licht mit einer ersten und einer zweiten Halbleiterlichtquelle anzugeben.

Diese Aufgabe wird durch einen Gegenstand mit den Merkmalen des unabhängigen Patentanspruchs gelöst. Vorteilhafte Ausführungsformen und Weiterbildungen des Gegenstands sind in den abhängigen Ansprüchen gekennzeichnet und gehen weiterhin aus der nachfolgenden Beschreibung und den Zeichnungen hervor.

Eine optoelektronische Vorrichtung zur Abstrahlung von Mischlicht mit Licht in zumindest einem ersten und einem zweiten Wellenlängenbereich umfasst gemäß zumindest einer Ausführungsform insbesondere
- eine erste Halbleiterlichtquelle mit einer ersten lichtemittierenden Diode (LED), die bei Anlegen eines ersten Stroms Licht mit einer ersten charakteristischen Wellenlänge im ersten Wellenlängenbereich und mit einer ersten Intensität abstrahlt,
- eine zweite Halbleiterlichtquelle mit einer zweiten LED, die bei Anlegen eines zweiten Stroms Licht mit einer zweiten charakteristischen Wellenlänge im zweiten Wellenlängenbereich und mit einer zweiten Intensität abstrahlt, wobei der erste und zweite Wellenlängenbereich voneinander verschiedene wellenlängenabhängige Intensitätsverteilungen aufweisen,
- einen optischen Sensor zur Umwandlung eines Teils des von der ersten Halbleiterlichtquelle abgestrahlten Lichts in ein erstes Sensorsignal und eines Teils des von der zweiten Halbleiterlichtquelle abgestrahlten Lichts in ein zweites Sensorsignal, und
- eine Regelungsvorrichtung zur Regelung des ersten und zweiten Stroms in Abhängigkeit vom ersten und zweiten Sensorsignal,
wobei
- die erste charakteristische Wellenlänge und die erste Intensität des von der ersten Halbleiterlichtquelle abgestrahlten Lichts eine erste Temperaturabhängigkeit und/oder Stromabhängigkeit und/oder Alterung aufweisen und
- die zweite charakteristische Wellenlänge und die zweite Intensität des von der zweiten Halbleiterlichtquelle abgestrahlten Lichts eine zweite Temperaturabhängigkeit und/oder Stromabhängigkeit und/oder Alterung aufweisen, die verschieden von der ersten Temperaturabhängigkeit ist,
- der optische Sensor im ersten Wellenlängenbereich eine erste wellenlängenabhängige Sensitivität und im zweiten Wellenlängenbereich eine zweite wellenlängenabhängige Sensitivität aufweist, die an die erste und zweite Temperaturabhängigkeit und/oder Stromabhängigkeit und/oder Alterung angepasst sind, und
- die Regelungsvorrichtung den ersten und zweiten Strom derart regelt, dass das erste Sensorsignal zum zweiten Sensorsignal ein vorbestimmtes Verhältnis aufweist.

Hier und im Folgenden kann "Licht" insbesondere elektromagnetische Strahlung mit einer oder mehreren Wellenlängen oder Wellenlängenbereichen aus einem ultravioletten bis infraroten Spektralbereich bezeichnen. Insbesondere kann Licht sichtbares Licht sein und Wellenlängen oder Wellenlängenbereiche aus einem sichtbaren Spektralbereich zwischen etwa 350 nm und etwa 800 nm umfassen. Sichtbares Licht kann hier und im Folgenden beispielsweise durch seinen Farbort mit x- und y-Farbortkoordinaten gemäß der einem Fachmann bekannten so genannten CIE-1931-Farborttafel beziehungsweise CIE-Normfarbtafel charakterisierbar sein.

Als weißes Licht oder Licht mit einem weißen Leucht- oder Farbeindruck kann hier und im Folgenden Licht mit einem Farbort bezeichnet werden, der dem Farbort eines planckschen Schwarzkörperstrahlers entspricht oder um weniger als 0,1 und bevorzugt um weniger als 0,05 in x- und/oder y-Farbortkoordinaten vom Farbort eines plankschen Schwarzkörperstrahlers abweicht. Weiterhin kann ein hier und im Folgenden als weißer Leuchteindruck bezeichneter Leuchteindruck durch Licht hervorgerufen werden, das einen einem Fachmann bekannten Farbwidergabeindex ("color rendering index", CRI) von größer oder gleich 60, bevorzugt von größer oder gleich 70 und besonders bevorzugt von größer oder gleich 80 aufweist.

Weiterhin kann als "warmweiß" hier und im Folgenden ein Leuchteindruck bezeichnet sein, der eine Farbtemperatur von kleiner oder gleich 5500 K aufweist. Als "kaltweiß" kann hier und im Folgenden ein weißer Leuchteindruck bezeichnet sein, der eine Farbtemperatur von größer als 5500 K aufweist. Der Begriff "Farbtemperatur" kann hier und im Folgenden die Farbtemperatur eines planckschen Schwarzkörperstrahlers bezeichnen oder auch die dem Fachmann bekannte so genannte korrelierte Farbtemperatur ("correlated color temperature", CCT) im Falle eines weißen Leuchteindrucks im oben beschriebenen Sinne, der durch Farbortkoordinaten charakterisiert werden kann, die von den Farbortkoordinaten der planckschen Schwarzkörperstrahler abweichen.

Ein erster und ein zweiter Leuchteindruck können hier und im Folgenden als "verschieden" bezeichnet werden, wenn der erste Leuchteindruck durch Licht mit einem ersten Farbort und der zweite Leuchteindruck von Licht mit einem zweiten Farbort hervorgerufen wird und der erste Farbort als verschieden vom zweiten Farbort wahrnehmbar ist. Verschiedene Leuchteindrücke können insbesondere durch voneinander verschiedene erste und zweite Wellenlängenbereiche hervorgerufen werden. Hier und im Folgenden können ein erster und ein zweiter Wellenlängenbereich dementsprechend als verschieden bezeichnet sein, wenn der erste und zweite Wellenlängenbereich eine voneinander verschiedene spektrale Intensitäts- oder Leistungsverteilung ("spectral power distribution") aufweisen, also wenn etwa der erste Wellenlängenbereich zumindest eine spektrale Komponente aufweist, die nicht im zweiten Wellenlängenbereich enthalten ist. Dabei sei betont, dass ein erster und zweiter Wellenlängenbereich, die verschieden voneinander sind, durchaus auch gleiche spektrale Komponenten aufweisen können. Dabei können der erste und zweite Wellenlängenbereich in einer, mehreren oder auch allen spektralen Komponenten hinsichtlich deren Wellenlänge übereinstimmen, solange wenigstens einer der beiden Wellenlängenbereiche zumindest eine spektrale Komponente aufweist, die überhaupt nicht oder nicht mit derselben relativen Intensität im anderen Wellenlängenbereich enthalten ist, so dass der erste und zweite Wellenlängenbereiche jeweilige Leucht- und Farbeindrücke mit unterschiedlicher x- und/oder unterschiedlicher y-Koordinate in der CIE-Normfarbtafel hervorrufen. Das kann insbesondere bedeuten, dass der erste und zweite Wellenlängenbereich beispielsweise bei derselben Wellenlänge jeweils eine spektrale Komponente aufweisen, die sich in ihrer Intensität unterscheiden, etwa um einen Faktor von größer oder gleich 10.

Hier und im Folgenden werden ein erster und zweiter Farbort oder Leuchteindruck als voneinander verschieden wahrnehmbar bezeichnet, wenn diese von einem durchschnittlichen menschlichen Betrachter als verschieden voneinander wahrnehmbar sind. Insbesondere sind ein erster und zweiter Leuchteindruck mit einem ersten und zweiten Farbort nicht verschieden im Sinne der vorliegenden Anmeldung, wenn der zweite Farbort in der MacAdams-Ellipse mit dem ersten Farbort als Mittelpunkt beziehungsweise Bezugsfarbort liegt oder umgekehrt. Das Konzept der MacAdams-Ellipsen in Bezug auf Wahrnehmbarkeiten von Farbunterschieden ist dem Fachmann bekannt und wird hier nicht weiter ausgeführt.

Die erste beziehungsweise zweite charakteristische Wellenlänge kann die intensitätsstärkste Wellenlänge des ersten beziehungsweise zweiten Wellenlängenbereichs bezeichnen. Alternativ kann die erste beziehungsweise zweite charakteristische Wellenlänge auch die mittlere Wellenlänge des ersten beziehungsweise zweiten Wellenlängenbereichs bezeichnen. Besonders bevorzugt kann die erste beziehungsweise zweite charakteristische Wellenlänge auch die jeweils über die einzelnen spektralen Intensitäten gewichtete mittlere Wellenlänge des ersten beziehungsweise zweiten Wellenlängenbereichs bezeichnen. Eine Änderung der ersten beziehungsweise zweiten charakteristischen Wellenlänge ergibt sich durch eine Verschiebung des ersten beziehungsweise zweiten Wellenlängenbereichs und/oder aus einer Veränderung der relativen Intensitäten der spektralen Anteile des ersten beziehungsweise des zweiten Wellenlängenbereichs. Eine Änderung der ersten beziehungsweise zweiten charakteristischen Wellenlänge hat somit auch eine Änderung des jeweiligen Farborts des Lichts zur Folge, das von der ersten beziehungsweise zweiten Halbleiterlichtquelle abgestrahlt wird.

Bei der hier beschriebenen optoelektronischen Vorrichtung ist das erste Sensorsignal abhängig von der ersten Intensität sowie auch vom ersten Wellenlängenbereich beziehungsweise der ersten charakteristischen Wellenlänge. Das bedeutet insbesondere, dass sich das erste Sensorsignal ändert, wenn sich die erste Intensität ändert und/oder wenn sich der ersten Wellenlängenbereich beziehungsweise die erste charakteristische Wellenlänge ändert, auch wenn die erste Intensität dabei gleich bleibt. Beispielsweise kann die erste Sensitivität mit zunehmender Wellenlänge im ersten Wellenlängenbereich zu- oder abnehmen, so dass das erste Sensorsignal mit zunehmender ersten charakteristischen Wellenlänge dementsprechend zu- oder abnehmen kann, auch wenn die erste Intensität gleich bleibt. Entsprechend gilt das im Zusammenhang mit dem ersten Sensorsignal und der ersten Sensitivität Gesagte auch für das zweite Sensorsignal und die zweite Sensitivität. Dadurch kann der optische Sensor zumindest im ersten und zweiten Wellenlängenbereich eine wellenlängenabhängige Sensitivität aufweisen, die, ähnlich wie oben für die Empfindlichkeit des menschlichen Auges beschrieben für verschiedene Wellenlängen, verschieden groß ist. Das erste und zweite Sensorsignal kann daher zusätzlich zur Änderung der ersten beziehungsweise zweiten Intensität auch Veränderungen der ersten beziehungsweise zweiten charakteristischen Wellenlänge Rechnung tragen. Dadurch, dass die erste und zweite Sensitivität an die erste beziehungsweise zweite Wellenlängenabhängigkeit angepasst sind, kann die Regelungs- und Steuerungsaufgabe der optoelektronischen Vorrichtung, die besonders bevorzugt zu einem möglichst konstanten Leucht- und Farbeindruck des Mischlichts führen soll, besser als bei bekannten Regelungseinrichtungen gelöst werden. Da der optische Sensor also die erste und zweite Sensitivität aufweist, die an die erste und zweite Temperaturabhängigkeit und/oder Stromabhängigkeit und/oder Alterung angepasst sind, sind durch den optischen Sensor die nötigen Informationen für Korrektursignale für den ersten und zweiten Strom enthalten, mittels derer beispielsweise der Farbort und/oder die Intensität des Msichlichts rgeregelt werden können.

Das vorbestimmte Verhältnis des ersten und zweiten Sensorsignals zueinander kann durch die Regelungseinrichtung konstant gehalten werden. Die Regelungsvorrichtung ermöglicht somit also beispielsweise, dass das Verhältnis des ersten Sensorsignals zum zweiten Sensorsignal beispielsweise bei einer Änderung der Umgebungs- und/oder Betriebstemperatur konstant bleibt. Dies bedeutet insbesondere, dass bei einer Änderung des ersten Sensorsignals und/oder des zweiten Sensorsignals derart, dass sich auch das Verhältnis des ersten zum zweiten Sensorsignal ändern würde, die Regelungsvorrichtung den ersten und/oder zweiten Strom und damit die erste und/oder zweite Intensität derart nachregelt, dass die Änderung des Verhältnisses des ersten Sensorsignals zum zweiten Sensorsignal kompensiert wird. Das vorbestimmte Verhältnis des ersten zum zweiten Sensorsignal kann weiterhin auch von der Stärke des ersten und/oder zweiten Sensorsignals abhängen, so dass sich das vorbestimmte Verhältnis in Abhängigkeit vom ersten und/oder zweiten Sensorsignal auf vorbestimmte Weise ändern kann. Dadurch kann es beispielsweise möglich sein, zusammen mit der ersten und zweiten Sensitivität den Farbort des Mischlichts hinsichtlich Temperatur, Strombeaufschlagung und/oder Alterung der lichtemittierenden Dioden zu regeln.

Bei bekannten Regelungseinrichtungen, bei denen die beispielsweise von mehreren LEDs abgestrahlte Intensität mit Photodioden gemessen wird, werden üblicherweise nur die Intensitätsänderungen des abgestrahlten Lichts berücksichtigt. Herkömmliche Regelungseinrichtungen ermitteln somit ein Korrektursignal, das alleine abhängig von der jeweils gemessenen Intensität ist. Hierbei können die bekannten Regelungseinrichtungen aber keine Wellenlängenverschiebungen des abgestrahlten Lichts ausgleichen. Wie bereits vorab beschrieben können aber gerade solche Wellenlängenverschiebungen trotz der durch die Regelungseinrichtung konstant gehaltenen abgestrahlten Intensität wegen der wellenlängenabhängigen Empfindlichkeit des menschlichen Auges zu einer Veränderung des wahrgenommenen Farb- und Leuchteindrucks führen, da ein an sich konstant gehaltener Lichtstrom in Abhängigkeit von der Wellenlänge schwächer oder stärker wahrgenommen wird. Werden beispielsweise mehrere verschiedene LEDs verwendet, die unterschiedliche Wellenlängenverschiebungen aufweisen, so wird bei Temperaturänderungen der LEDs trotz einer Regelung der jeweils abgestrahlten Intensitäten der verschiedenen LEDs eine erhebliche Farbortänderung wahrnehmbar sein, da durch die herkömmlichen Regelungseinrichtungen eben keine der Wellenlängenverschiebungen der verschiedenen LEDs ausgeglichen werden kann.

Alternativ dazu ist bekannt, die Temperatur der LEDs zu messen, indem eine Regelungseinrichtung einen oder mehrere Temperatursensoren aufweist. In einer derartigen bekannten Regelungseinrichtung ist weiterhin eine Tabelle oder eine Datenbank hinterlegt, aus der in Abhängigkeit von der Temperatur Korrekturwerte für die Ansteuerung der LEDs auslesbar sind. In den Korrekturwerten können dabei neben den temperaturabhängigen Intensitätsänderungen der einzelnen LEDs auch die jeweiligen temperaturabhängigen Wellenlängenverschiebungen berücksichtigt werden.

Die Regelungsvorrichtung der hier beschriebenen optoelektronischen Vorrichtung kann passive und/oder aktive analoge und/oder digitale elektronische Bauelemente aufweisen, rein beispielhaft etwa regelbare Widerstände, Festwiderstände, Kondensatoren, Spulen, Transistoren, Operationsverstärker, Mikrokontroller, Mikroprozessoren und Kombinationen daraus. Insbesondere kann die Regelungsvorrichtung als Rückkoppelschleife ausgebildet sein oder auch direkt als Stromquelle für die erste und zweite Halbleiterlichtquelle ausgeführt sein oder in eine derartige Stromquelle integriert sein. Die Regelungsvorrichtung kann elektronische Bauelemente und Schaltungen aufweisen, die von Reglern zur Proportionalregelung, integrierenden Regelung und/oder differenziellen Regelung bekannt sind und die geeignet sind, einen oder mehrere Signale, hier insbesondere das erste und zweite Sensorsignal, relativ zu vorgegebenen so genannten Ist-Werten oder auch insbesondere relativ zueinander zu regeln und zu steuern. Dabei kann aufgrund des hier beschriebenen Sensors bei der Regelungsvorrichtung auf Komponenten verzichtet werden, die in den oben beschriebenen bekannten Regelungseinrichtungen zum Abgleich von Messwerten mit gespeicherten Tabellenwerten erforderlich sind.

Eine LED einer Halbleiterlichtquelle, also etwa die erste und/oder die zweite LED, kann insbesondere eine Epitaxieschichtenfolge, also eine epitaktisch gewachsene Halbleiterschichtenfolge, aufweisen. Dabei kann die LED beispielsweise auf der Basis von InGaAlN ausgeführt sein. Unter InGaAlN-basierte LEDs und Halbleiterschichtenfolgen fallen insbesondere solche, bei denen die epitaktisch hergestellte Halbleiterschichtenfolge in der Regel eine Schichtenfolge aus unterschiedlichen Einzelschichten aufweist, die mindestens eine Einzelschicht enthält, die ein Material aus dem III-V-Verbindungshalbleitermaterialsystem InₓAl_{y}Ga_{1-x-y}N mit 0 ≤ x ≤1, 0 ≤ y ≤ 1 und x + y ≤ 1 aufweist. Halbleiterschichtenfolgen, die zumindest eine aktive Schicht auf Basis auf InGaAlN aufweisen, können beispielsweise bevorzugt elektromagnetische Strahlung in einem ultravioletten bis grünen Wellenlängenbereich emittieren.

Alternativ oder zusätzlich kann die LED auch auf InGaAlP basieren, das heißt, dass die LED unterschiedliche Einzelschichten aufweisen kann, wovon mindestens eine Einzelschicht ein Material aus dem III-V-Verbindungshalbleitermaterialsystem InₓAl_{y}Ga_{1-x-y}P mit 0 ≤ x ≤ 1, 0 ≤ y ≤ 1 und x + y ≤ 1 aufweist. Halbleiterschichtenfolgen oder LEDs, die zumindest eine aktive Schicht auf Basis von InGaAlP aufweisen, können beispielsweise bevorzugt elektromagnetische Strahlung mit einer oder mehreren spektralen Komponenten in einen grünen bis roten Wellenlängenbereich emittieren.

Alternativ oder zusätzlich können die Halbleiterschichtenfolge oder LED auch andere III-V-Verbindungshalbleitermaterialsysteme wie etwa ein AlGaAsbasiertes Material oder ein II-VI-Verbindungshalbleitermaterialsysteme aufweisen. Insbesondere kann eine LED, die ein AlGaAs-basiertes Material aufweist, geeignet sein, elektromagnetische Strahlung mit einer oder mehreren spektralen Komponenten in einem roten bis infraroten Wellenlängenbereich zu emittieren. Ein II-VI-Verbindungshalbleitermaterial kann wenigstens ein Element aus der zweiten Hauptgruppe oder der zweiten Nebengruppe, wie beispielsweise Be, Mg, Ca, Sr, Cd, Zn, Sn, und ein Element aus der sechsten Hauptgruppe, wie beispielsweise O, S, Se, Te, aufweisen. Insbesondere umfasst ein II-VI-Verbindungs-Halbleitermaterial eine binäre, ternäre oder quaternäre Verbindung, die wenigstens ein Element aus der zweiten Hauptgruppe oder zweiten Nebengruppe und wenigstens ein Element aus der sechsten Hauptgruppe umfasst. Eine solche binäre, ternäre oder quaternäre Verbindung kann zudem beispielsweise ein oder mehrere Dotierstoffe sowie zusätzliche Bestandteile aufweisen. Beispielsweise gehören zu den II-VI-Verbindungs-Halbleitermaterialien: ZnO, ZnMgO, CdS, ZnCdS, MgBeO.

Die Halbleiterschichtenfolge der ersten und/oder der zweiten LED kann weiterhin ein Substrat aufweisen, auf dem die oben genannten III-V- oder II-VI-Verbindungshalbleitermaterialien abgeschieden sind. Das Substrat kann dabei ein Halbleitermaterial, beispielsweise ein oben genanntes Verbindungshalbleitermaterialsystem, umfassen. Insbesondere kann das Substrat Saphir, GaAs, GaP, GaN, InP, SiC, Si und/oder Ge umfassen oder aus einem solchen Material sein. Die Halbleiterschichtenfolge kann als aktiven Bereich beispielsweise einen herkömmlichen pn-Übergang, eine Doppelheterostruktur, eine Einfach-Quantentopfstruktur (SQW-Struktur) oder eine Mehrfach-Quantentopfstruktur (MQW-Struktur) aufweisen. Die Bezeichnung Quantentopfstruktur umfasst im Rahmen der Anmeldung insbesondere jegliche Struktur, bei der Ladungsträger durch Einschluss ("confinement") eine Quantisierung ihrer Energiezustände erfahren können. Insbesondere beinhaltet die Bezeichnung Quantentopfstruktur keine Angabe über die Dimensionalität der Quantisierung. Sie umfasst somit unter anderem Quantentröge, Quantendrähte und Quantenpunkte und jede Kombination dieser Strukturen. Die Halbleiterschichtenfolge kann neben dem aktiven Bereich weitere funktionale Schichten und funktionelle Bereiche umfassen, etwa p- oder n-dotierte Ladungsträgertransportschichten, also Elektronen- oder Löchertransportschichten, undotierte oder p- oder n-dotierte Confinement-, Cladding- oder Wellenleiterschichten, Barriereschichten, Planarisierungsschichten, Pufferschichten, Schutzschichten und/oder Elektroden sowie Kombinationen daraus. Solche Strukturen den aktiven Bereich oder die weiteren funktionalen Schichten und Bereiche betreffend sind dem Fachmann insbesondere hinsichtlich Aufbau, Funktion und Struktur bekannt und werden von daher an dieser Stelle nicht näher erläutert.

Die erste und/oder die zweite LED können beispielsweise auch als Dünnfilm-Leuchtdioden-Chips ausgeführt sein. Ein Dünnfilm-Leuchtdioden-Chip zeichnet sich insbesondere durch eines oder mehrere der folgenden charakteristischen Merkmale aus:
- an einer zu einem Trägerelement hin gewandten ersten Hauptfläche einer strahlungserzeugenden Epitaxieschichtenfolge ist eine reflektierende Schicht aufgebracht oder ausgebildet, die zumindest einen Teil der in der Epitaxieschichtenfolge erzeugten elektromagnetischen Strahlung in diese zurückreflektiert;
- die Epitaxieschichtenfolge weist eine Dicke im Bereich von 20µm oder weniger, insbesondere im Bereich von 10 µm auf; und/oder
- die Epitaxieschichtenfolge enthält mindestens eine Halbleiterschicht mit zumindest einer Fläche, die eine Durchmischungsstruktur aufweist, die im Idealfall zu einer annähernd ergodischen Verteilung des Lichtes in der epitaktischen Epitaxieschichtenfolge führt, d.h. sie weist ein möglichst ergodisch stochastisches Streuverhalten auf. Die Epitaxieschichtenfolge eines Dünnfilm-Leuchtdioden-Chips kann nach dem Aufwachsen auf einem Aufwachssubstrat durch Umbonden auf ein als Trägerelement ausgebildetes Trägersubstrat übertragen sein.

Weiterhin kann die erste und/oder die zweite Halbleiterlichtquelle und damit die wenigstens eine erste und/oder zweite LED einen mischfarbigen und insbesondere beispielsweise einen weißen Leuchteindruck erwecken. Dazu kann die erste und/oder zweite LED einen Wellenlängenkonversionsstoff aufweisen, der in Form eines Vergusses oder einer Oberflächenbeschichtung auf oder über der Epitaxieschichtenfolge der ersten und/oder zweiten LEDs aufgebracht sein kann. Der Wellenlängenkonversionsstoff kann geeignet sein, zumindest einen Teil des von einer LED emittierten Lichts, das etwa in einem ultravioletten bis blauen Spektralbereich liegen kann, in langwelligeres Licht zu konvertieren, also etwa in Licht mit einer oder mehreren spektralen Komponenten in einem grünen und/oder einem gelben und/oder einem roten Wellenlängenbereich. Durch die Überlagerung des emittierten Lichts mit dem konvertierten Lichts kann ein mischfarbiger, beispielsweise weißer, Leuchteindruck erzeugt werden.

Der Wellenlängenkonversionsstoff kann einen oder mehrere der folgenden Materialien aufweisen: Granate der Seltenen Erden und der Erdalkalimetalle, beispielsweise YAG:Ce³⁺, Nitride, Nitridosilikate, Sione, Sialone, Aluminate, Oxide, Halophosphate, Orthosilikate, Sulfide, Vanadate, Perylene, Coumarin und Chlorosilikate. Weiterhin kann der Wellenlängenkonversionsstoff auch geeignete Mischungen und/oder Kombinationen daraus umfassen. Weiterhin kann der Wellenlängenkonversionsstoff in einem transparenten Matrixmaterial eingebettet sein, das den Wellenlängenkonversionsstoff umgibt oder enthält. Das transparente Matrixmaterial kann beispielsweise Silikone, Epoxide, Acrylate, Imide, Carbonate, Olefine oder Derivate davon in Form von Monomeren, Oligomeren oder Polymeren als Mischungen, Copolymere oder Verbindungen damit aufweisen. Beispielsweise kann das Matrixmaterial ein Epoxidharz, Polymethylmethacrylat (PMMA) oder ein Silikonharz sein.

Weiterhin kann das von der ersten und/oder zweiten Halbleiterlichtquelle beziehungsweise der ersten und/oder zweiten LED erzeugte Licht allein durch die Wahl der Materialien der Epitaxieschichtenfolgen ohne Verwendung eines Wellenlängenkonversionsstoffs bestimmt sein. Beispielsweise kann die erste Halbleiterlichtquelle einen weißen Leuchteindruck in Kombination mit einem Wellenlängenkonversionsstoff erwecken, während die zweite Halbleiterlichtquelle einen farbigen Leuchteindruck erwecken kann. So kann die erste Halbleiterlichtquelle beispielsweise eine erste LED auf Basis von InGaN aufweisen, die Licht in einem blauen Wellenlängenbereich emittiert. Weiterhin kann die erste LED einen Wellenlängenkonversionsstoff aufweisen, der einen Teil des blauen Primärlichts in grünes, gelbes oder gelb-grünes Sekundärlicht konvertiert, so dass der ersten Wellenlängenbereich blaue und grüne, gelbe oder gelb-grüne spektrale Komponenten umfasst und einen grünlichweißen bis kaltweißen Farbeindruck erweckt. Die zweite Halbleiterlichtquelle kann eine zweite LED auf Basis von InGaAlP aufweisen, die Licht in einem zweiten, roten Wellenlängenbereich abstrahlt. Durch Überlagerung des Lichts mit dem ersten und zweiten Wellenlängenbereich kann je nach gewünschter Gewichtung ein warmweißer Leuchteindruck durch das Mischlicht der optoelektronischen Vorrichtung erweckt werden. Alternativ dazu kann die zweite Halbleiterlichtquelle auch eine zweite LED auf Basis von InGaAlP aufweisen, die Licht in einem zweiten, gelben Wellenlängenbereich erzeugt, so dass die optoelektronische Vorrichtung ein Mischlicht mit einem kaltweißen Leuchteindruck abstrahlen kann. Bei derartigen optoelektronischen Vorrichtungen kann bei einer vorgegebenen Umgebungs- und Betriebstemperatur durch die erste Halbleiterlichtquelle eine grobe Vorauswahl des gewünschten Farborts möglich sein, während eine Feineinstellung beziehungsweise ein "Feintuning" des Farborts durch die zweite Halbleiterlichtquelle möglich ist. Alternativ können die erste und zweite Halbleiterlichtquelle umgekehrt hinsichtlich der vorher beschriebenen Wellenlängenbereiche und Farbeindrücke ausgeführt sein.

Weiterhin kann die erste Halbleiterlichtquelle und/oder die zweite Halbleiterlichtquelle jeweils eine Mehrzahl von ersten beziehungsweise zweiten LEDs aufweisen, die jeweils gleich ausgeführt sind.

Lichtemittierende Dioden weisen üblicherweise eine negative Temperaturabhängigkeit der abgestrahlten Intensität in typischen Umgebungs- und Betriebstemperaturen im Bereich von -40°C bis 125°C auf. Das bedeutet, dass die Intensität des abgestrahlten Lichts bei gleich bleibendem elektrischem Strom mit steigender Umgebungs- und Betriebstemperatur sinkt. Je nach Ausführung und Materialwahl einer LED kann dabei die Intensität des von einer LED abgestrahlten Lichts von 100% bei einer Temperatur von 0°C auf eine Intensität von kleiner oder gleich 90% bis größer oder gleich 10% bei einer Temperatur von 100°C abfallen. Weiterhin können LEDs je nach Materialwahl und Ausführungsform mit oder ohne Wellenlängenkonversionsstoff eine temperaturabhängige Verschiebung der charakteristischen Wellenlänge von bis zu +/-5% und mehr, also von einigen Nanometern, in einem Temperaturbereich von 0°C bis 100°C aufweisen.

Der optische Sensor zur Messung der ersten und zweiten Intensität beziehungsweise eines jeweiligen Teils davon kann insbesondere eine Photodiode und besonders bevorzugt eine Silizium-basierte Photodiode aufweisen oder eine solche sein. Silizium-basierte Photodioden können sich je nach Ausführungsform durch eine hohe oder zumindest ausreichende intrinsische Empfindlichkeit über den gesamten Wellenlängenbereich des sichtbaren Lichts auszeichnen. Für eine typische Breitband-Photodiode aus Silizium steigt dabei die spektrale Empfindlichkeit im Bereich von etwa 300 bis etwa 1000 Nanometer kontinuierlich an und fällt danach wieder ab, wobei je nach Ausführung das Empfindlichkeitsmaximum auch im Bereich von etwa 550 bis weniger als 1000 Nanometer liegen kann.

Zur Anpassung der ersten und zweiten Sensitivität des optischen Sensors kann dieser ein photoaktives Material mit der ersten und/oder zweiten Sensitivität als intrinsische Sensitivität oder alternativ oder zusätzlich ein optisches Filter aufweisen. Das optische Filter kann eine wellenlängenabhängige Durchlässigkeit zur Einstellung der ersten und/oder zweiten Sensitivität aufweisen. Das bedeutet, dass das optische Filter im ersten und/oder zweiten Wellenlängenbereich eine Durchlässigkeit für das Licht der ersten beziehungsweise zweiten Halbleiterlichtquelle aufweisen kann, die in Kombination mit der intrinsischen Sensitivität des optischen Sensormaterials der gewünschten ersten beziehungsweise zweiten Sensitivität entspricht. Dies kann insbesondere auch bedeuten, dass die Kombination des optischen Filters mit seiner wellenlängenabhängigen Durchlässigkeit zusammen mit der intrinsischen Empfindlichkeit des optischen Sensormaterials, also etwa des Siliziums, die gewünschte erste und zweite Sensitivität ergibt. Beispielsweise kann das optische Filter ein absorptives und/oder ein Dünnfilm-Filter aufweisen oder als solches ausgeführt sein, das im ersten und/oder zweiten Wellenlängenbereich zusammen mit der intrinsischen spektralen Empfindlichkeit des optischen Sensors zur gewünschten ersten und/oder zweiten Sensitivität führt.

Der optische Sensor kann beispielsweise auch eine erste Sensorfacette und eine zweite Sensorfacette aufweisen. Der Teil des von der ersten Halbleiterlichtquelle abgestrahlten Lichts im ersten Wellenlängenbereich kann dabei zumindest auf die erste Sensorfacette eingestrahlt werden, während der Teil des von der zweiten Halbleiterlichtquelle abgestrahlten Lichts im zweiten Wellenlängenbereich zumindest auf die zweite Sensorfacette eingestrahlt werden kann. Weiterhin können auf der ersten und/oder der zweiten Sensorfacette auch ein optisches Filter angeordnet sein, so dass der optische Sensor zusammen mit dem optischen Filter im Bereich der ersten Sensorfacette die erste Sensitivität im ersten Wellenlängenbereich aufweist und im Bereich der zweiten Sensorfacette die zweite Sensitivität im zweiten Wellenlängenbereich. Dabei kann das Licht der ersten Halbleiterlichtquelle und das Licht der zweiten Halbleiterlichtquelle auch auf die gesamte aktive Fläche des optischen Sensors eingestrahlt werden, wenn das optische Filter beispielsweise das Licht im zweiten Wellenlängenbereich gegen das Gesamtspektrum mit dem ersten und zweiten Wellenlängenbereich oder auch gegen das Licht im ersten Wellenlängenbereich im Bereich der zweiten Sensorfacette diskriminieren kann. Die erste und zweite Sensorfacette können elektrisch und optisch auch voneinander getrennt sein, so dass der optische Sensor direkt das erste Sensorsignal als Signal der ersten Sensorfacette und das zweite Sensorsignal als Signal der zweiten Sensorfacette liefern kann. Weiterhin kann der optische Sensor auch zwei getrennte Photodioden umfassen.

Alternativ oder zusätzlich kann der erste und/oder der zweite Strom im Betrieb der optoelektronischen Vorrichtung moduliert werden. Die Regelungsvorrichtung kann in diesem Fall geeignet sein, das Signal des optischen Sensors mittels Frequenzanalyse, beispielsweise mittels bekannter Frequenzmisch- und Filtermethoden, in das erste und zweite Sensorsignal aufzuteilen. Dazu können der erste und der zweite Strom mit unterschiedlichen Frequenzen moduliert werden oder auch nur einer der beiden Ströme. Insbesondere können der erste und/oder der zweite Strom durch Ein- und Ausschalten beispielsweise in Form eines Rechtecksignals amplitudenmoduliert werden.

Durch die beschriebenen Ausführungsformen in Form einer Spektralanalyse mittels des optischen Filters und/oder einer Frequenzanalyse bei moduliertem ersten und/oder zweiten Strom kann es möglich sein, dass der optische Sensor zwischen dem Licht der ersten Halbleiterlichtquelle und dem Licht der zweiten Halbleiterlichtquelle "unterscheiden" kann. Dadurch kann der optische Sensor selbst das Licht der ersten Halbleiterlichtquelle und das Licht der zweiten Halbleiterlichtquelle zu den gewünschten Sensorsignalen verarbeiten und die gewünschte spektrale Information zu sinnvollen Regelgrößen "kondensieren", ohne dass aufwändige Lösungen mit Spektrometern und digitaler Softwareauswertung notwendig sind.

Mit unterschiedlichen spektralen Abhängigkeiten der Empfindlichkeit des optischen Sensors können unterschiedliche Regelungsaufgaben hinsichtlich der Temperaturabhängigkeit des Mischlichts, insbesondere dessen Farborts, realisiert werden. Insbesondere kann es ein Ziel der hier beschriebenen optoelektronischen Vorrichtung sein, dass das Mischlicht hinsichtlich seines Farborts eine möglichst geringe Temperatur- und/oder Strom- und/oder Alterungsabhängigkeit aufweist.

Dabei kann beispielsweise die zweite charakteristische Wellenlänge im Bereich der fallenden Flanke der V_{λ}-Kurve liegen. Das bedeutet, dass die zweite charakteristische Wellenlänge in einem grünen bis roten Wellenlängenbereich oberhalb von etwa 550 Nanometer liegt. Die erste charakteristische Wellenlänge kann beispielsweise in einem blauen bis grünen Wellenlängenbereich liegen, so dass das Mischlicht der optoelektronischen Vorrichtung einen weißen Leuchteindruck vermitteln kann. Insbesondere kann die erste charakteristische Wellenlänge beispielsweise auf der steigenden Flanke oder dem Maximum der V_{λ}-Kurve im Bereich zwischen etwa 400 bis 550 Nanometer liegen.

Aufgrund der obigen Ausführungen hinsichtlich der spektralen Empfindlichkeit des menschlichen Auges würde es für die zweite charakteristische Wellenlänge im Bereich der fallenden Flanke der V_{λ}-Kurve nahe liegen, dass die zweite Sensitivität dieselbe wellenlängenabhängige Steigung wie die V_{λ}-Kurve im zweiten Wellenlängenbereich aufweist, da der Fachmann intuitiv vermuten würde, dass durch eine derartige an die V_{λ}-Kurve angepasste Sensitivität die wellenlängenabhängige Wahrnehmung des menschlichen Auges ausgeglichen werden könnte. Werden hier und im Folgenden wellenlängenabhängige Steigungen der V_{λ}-Kurve und wellenlängenabhängige Steigungen der ersten und zweiten Sensitivität verglichen, so wird, soweit nichts anderes explizit angegeben ist, davon ausgegangen, dass die jeweiligen spektralen Abhängigkeiten auf einen Maximalwert zu 1 normiert sind. Dabei beträgt die mittlere wellenlängenabhängige Steigung der V_{λ}-Kurve im Wellenlängenbereich zwischen 600 und 650 Nanometer etwa-1%/nm.

Jedoch hat sich überraschend herausgestellt, dass mit einer zweiten Sensitivität, die eine von der V_{λ}-Kurve im zweiten Wellenlängenbereich verschiedene wellenlängenabhängige Steigung aufweist, eine verbesserte Regelung des Farborts des Mischlichts hinsichtlich einer möglichst geringen Temperatur- und Alterungsabhängigkeit möglich ist. Insbesondere hat sich dabei herausgestellt, dass, wenn die zweite charakteristische Wellenlänge mit steigenden Temperaturen größer wird, es besonders vorteilhaft ist, wenn das Verhältnis der mittleren wellenlängenabhängigen Steigung der zweiten Sensitivität zur mittleren wellenlängenabhängigen Steigung der V_{λ}-Kurve im zweiten Wellenlängenbereich kleiner als 1 ist. Das bedeutet mit anderen Worten, dass die zweite Sensitivität mit größer werdender Wellenlänge langsamer abnimmt als die V_{λ}-Kurve. Insbesondere kann das Verhältnis der mittleren wellenlängenabhängigen Steigung der zweiten Sensitivität zur mittleren wellenlängenabhängigen Steigung der V_{λ}-Kurve im zweiten Wellenlängenbereich kleiner oder gleich 0,8 und größer oder gleich 0,2 und besonders bevorzugt etwa 0,5 sein.

Die hier beschriebene optoelektronische Vorrichtung kann insbesondere derart ausgeführt sein, dass ein Mischlicht abgestrahlt werden kann, das in einem Temperaturbereich von größer oder gleich 0°C und kleiner oder gleich 60°C, bevorzugt kleiner oder gleich 100°C, und besonders bevorzugt von größer oder gleich -40°C und kleiner oder gleich 125°C eine temperaturabhängige Farbortverschiebung um einen mittleren Farbort aufweist, die entlang einer Hauptachse einer MacAdams-Ellipse um den mittleren Farbort herum verläuft. Dabei können die Farbortverschiebung und der mittlere Farbort durch einen ersten Farbort des bei einer Temperatur der optoelektronischen Vorrichtung von beispielsweise 0°C emittierten Mischlichts und durch einen zweiten Farbort des bei einer Temperatur von beispielsweise 60° oder 100°C emittierten Mischlichts charakterisiert sein. Die temperaturabhängige Farbortverschiebung kann dann in erster Näherung durch die Verbindungslinie zwischen dem ersten und zweiten Farbort charakterisierbar sein. "Entlang der Hauptachse" bedeutet in diesem Zusammenhang, dass die geometrische Projektion dieser Verbindungslinie auf die Hauptachse der MacAdams-Ellipse länger ist als die Projektion der Verbindungslinie auf die Nebenachse derselben MacAdams-Ellipse. Besonders bevorzugt verlaufen die Verbindungslinie und damit auch die Farbortverschiebung des Mischlichts parallel oder zumindest annähernd parallel zur Hauptachse der zugehörigen MacAdams-Ellipse. Farbortverschiebungen, die vom Mittelpunkt beziehungsweise Bezugsfarbort entlang der Hauptachse einer MacAdams-Ellipse verlaufen, sind schwerer wahrnehmbar als solche, die mit einem zahlenmäßig gleichen Farbortkoordinatenunterschied entlang der Nebenachse der MacAdams-Ellipse verlaufen.

Die optoelektronische Vorrichtung kann ein Gehäuse oder eine Leiterplatte aufweisen, in dem beziehungsweise auf dem die erste Halbleiterlichtquelle, die zweite Halbleiterlichtquelle und der optische Sensor angeordnet sind. Das Gehäuse kann einen Kunststoff aufweisen, insbesondere ein Thermoplast oder ein Duroplast. Beispielsweise kann das Gehäuse durch einen Formprozess wie etwa Spritzpressen, Spritzgießen, Formpressen, Schneiden, Sägen, Fräsen oder eine Kombination daraus herstellbar sein. Der Kunststoff kann dabei Siloxan und/oder Epoxid-Gruppen aufweisen und etwa als Silikon, Epoxidharz oder ein Hybridmaterial aus einer Mischung oder einem Copolymer aus Silikon und Epoxid ausgebildet sein. Alternativ oder zusätzlich kann der Kunststoff auch Polymethylmethacrylat (PMMA), Polyacrylat, Polycarbonat und/oder Imidgruppen aufweisen. Das Gehäuse kann beispielsweise eine Vertiefung aufweisen, in der zumindest die erste Halbleiterlichtquelle und die zweite Halbleiterlichtquelle angeordnet ist und über die das Licht im ersten Wellenlängenbereich abgestrahlt werden kann. Der optische Sensor kann ebenfalls in der Vertiefung angeordnet sein.

Das Gehäuse kann weiterhin einen Leiterrahmen zur elektrischen Kontaktierung der ersten Halbleiterlichtquelle, der zweiten Halbleiterlichtquelle und des optischen Sensors aufweisen. Der Leiterrahmen kann dabei in das Gehäuse integriert sein, wobei der Leiterrahmen vom Gehäusekörper umformt, umgeben und/oder von diesem umgossen ist. Der Leiterrahmen kann einen oder mehrere Montagebereiche aufweisen, auf dem oder denen die erste Halbleiterlichtquelle, die zweite Halbleiterlichtquelle und der optische Sensor aufgebracht werden können. Der Leiterrahmen kann dabei eine Mehrzahl elektrischer Anschlussmöglichkeiten zur elektrischen Kontaktierung der ersten Halbleiterlichtquelle, der zweiten Halbleiterlichtquelle und des optischen Sensors aufweisen, die etwa als Bondpads oder als Montageflächen ausgebildet sind. Mittels des Montagebereichs beziehungsweise der Montagebereiche können dabei insbesondere eine geeignete Verschaltung sowie auch ein elektrischer Anschluss der ersten Halbleiterlichtquelle, der zweiten Halbleiterlichtquelle und gegebenenfalls auch des optischen Sensors an eine externe Strom- und Spannungsversorgung und/oder an die Regelungsvorrichtung möglich sein. Der Montagebereich kann beispielsweise als Montagefläche auf dem Leiterrahmen ausgebildet sein. Durch die Anordnung der ersten und zweiten Halbleiterlichtquelle und des optischen Sensors in einem Gehäuse kann somit eine kompakte und Platz sparende optoelektronische Vorrichtung ermöglicht werden.

Weiterhin kann die optoelektronische Vorrichtung eine dritte Halbleiterlichtquelle mit zumindest einer dritten lichtemittierenden Diode aufweisen, die bei Anlegen eines dritten Stroms im Betrieb Licht mit einer dritten charakteristischen Wellenlänge in einem dritten Wellenlängenbereich und mit einer dritten Intensität abstrahlt. Der dritte Wellenlängenbereich kann dabei verschieden vom ersten und zweiten Wellenlängenbereich sein. Die dritte charakteristische Wellenlänge und die dritte Intensität können eine dritte Temperaturabhängigkeit und/oder Stromabhängigkeit und/oder Alterung aufweisen. Insbesondere kann ein Teil des Lichts der dritten Halbleiterlichtquelle auf den optischen Sensor eingestrahlt werden, der im dritten Wellenlängenbereich eine dritte wellenlängenabhängige Sensitivität aufweist, die an die dritte Temperaturabhängigkeit und/oder Stromabhängigkeit und/oder Alterung der dritten Halbleiterlichtquelle angepasst ist. Insbesondere kann die Regelungsvorrichtung den ersten, zweite und dritten Strom derart regeln, dass das Verhältnis jeweils zwei des ersten, zweiten und dritten Sensorsignals ein vorbestimmtes Verhältnis aufweisen.

Die dritte Halbleiterlichtquelle und die dritte LED können eines oder mehrere Merkmale oder Kombinationen davon wie weiter oben im Zusammenhang mit der ersten und zweiten Halbleiterlichtquelle und der ersten und zweiten LED beschrieben aufweisen. Die dritte Sensitivität des optischen Sensors kann durch die intrinsische Sensitivität des Sensors selbst im dritten Wellenlängenbereich oder auch durch die Kombination des optischen Sensors mit einem wie oben beschriebenen optischen Filter ermöglicht werden. Insbesondere kann der optische Sensor auch eine dritte Sensorfacette und/oder weitere oben genannte Merkmale aufweisen.

Weitere Vorteile und vorteilhafte Ausführungsformen und Weiterbildungen der Erfindung ergeben sich aus den im Folgenden in Verbindung mit den Figuren 1A bis 11B beschriebenen Ausführungsformen.

Es zeigen:
Figur 1A eine schematische Darstellung der V_{λ}-Kurve,
Figuren 1B bis 2 schematische Darstellungen der CIE-Normfarbtafel,
Figuren 3A und 3B Graphen von Temperaturabhängigkeiten von ersten und zweiten LEDs gemäß einem Ausführungsbeispiel,
Figuren 4A und 4B schematische Darstellungen einer optoelektronischen Vorrichtung gemäß einem weiteren Ausführungsbeispiel,
Figuren 5A und 5B schematische Darstellungen von optischen Sensoren gemäß weiteren Ausführungsbeispielen,
Figuren 6A und 6B schematische Darstellungen von Farbortverschiebungen von optoelektronischen Vorrichtungen,
Figuren 7A bis 10B schematische Darstellungen von Empfindlichkeiten von optischen Sensoren und den daraus resultierenden temperaturabhängigen Farbortverschiebungen des Mischlichts von optoelektronischen Vorrichtungen gemäß weiteren Ausführungsbeispielen und
Figuren 11A und 11B schematische Darstellungen einer optoelektronischen Vorrichtung und der ersten, zweiten und dritten Sensitivität eines optischen Sensors gemäß einem weiteren Ausführungsbeispiel.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, wie zum Beispiel Schichten, Bauteile, Bauelemente und Bereiche, zur besseren Darstellbarkeit und/oder zum besseren Verständnis übertrieben dick oder groß dimensioniert dargestellt sein.

In Figur 1A ist, wie im einleitenden Teil beschrieben, die so genannte V_{λ}-Kurve 990 für einen Wellenlängenbereich von 400 bis 700 Nanometer gezeigt. Die durchschnittliche spektrale Empfindlichkeit R des menschlichen Auges ist dabei auf der y-Achse in beliebigen Einheiten angegeben. Werden in den folgenden Ausführungsbeispielen wellenlängenabhängige Steigungen der V_{λ}-Kurve angegeben und/oder mit wellenlängenabhängigen Steigungen der ersten und zweiten Sensitivität verglichen, so wird, soweit nichts anderes explizit angegeben ist, davon ausgegangen, dass die jeweiligen spektralen Abhängigkeiten auf einen Maximalwert zu 1 normiert sind. Das bedeutet, dass sich Angaben über wellenlängenabhängige Steigungen der V_{λ}-Kurve auf eine auf 1 normierte V_{λ}-Kurve beziehen, deren Maximum bei etwa 555 Nanometer eine spektrale Empfindlichkeit R von 1 aufweist. Für die derartige normierte V_{λ}-Kurve beträgt die mittlere wellenlängenabhängig Steigung im Wellenlängenbereich zwischen 600 und 650 Nanometer etwa -1%/nm.

In den folgenden Ausführungsbeispielen werden erste Halbleiterlichtquellen 1 mit zumindest einer ersten LED 11 beschrieben, die einen kaltweißen bis gelbgrünlichen Leuchteindruck erweckt. Die zumindest eine erste LED 11 weist dazu wie im allgemeinen Teil beschrieben rein beispielhaft eine blau emittierende Epitaxieschichtenfolge auf InGaN-Basis auf, auf der ein gelb-grün emittierender Wellenlängenkonversionsstoff aufgebracht ist. Der Farbort liegt in etwa bei x-Koordinaten im Bereich von 0,36 bis 0,37 und y-Koordinaten im Bereich von 0,42 bis 0,44, die charakteristische erste Wellenlänge der ersten LED 11 bei etwa 565 Nanometer. Um von einer optoelektronischen Vorrichtung abgestrahltes warmweißes Mischlicht zu erzeugen, sind die im Folgenden beschriebenen zweiten Halbleiterlichtquellen 2 mit zumindest einer zweiten LED 21 ausgebildet, die in einem zweiten, orange-roten bis roten Wellenlängenbereich um eine zweite charakteristische Wellenlänge von etwa 610 Nanometer herum Licht emittiert. Um warmweißes Mischlicht mittels LEDs zu erzeugen, werden üblicherweise auch rote Wellenlängenkonversionsstoffe in Verbindung mit einer blau emittierenden Epitaxieschichtenfolge verwendet. Jedoch kann aufgrund der typischerweise breiten Emissionsbanden von rot emittierenden Wellenlängenkonversionsstoffen viel Leistung in einem Wellenlängenbereich liegen, in dem die Augenempfindlichkeit sehr gering ist, also, wie aus der V_{λ}-Kurve 990 in Figur 1A hervorgeht, in einem Bereich von größer oder gleich etwa 640 Nanometer. Bevorzugt wird für die im Folgenden beschriebenen Ausführungsbeispiele für optoelektronische Vorrichtungen deshalb kein zusätzlicher rot emittierender Wellenlängenkonversionsstoff verwendet. Vielmehr wird das Licht mit dem zweiten Wellenlängenbereich durch das Material der Epitaxieschichtenfolge der zumindest einen zweiten LED 21 auf Basis von InGaAlP ohne Verwendung eines zusätzlichen rot emittierenden Wellenlängenkonversionsstoffs erzeugt.

Durch Verwendung von zweiten Halbleiterlichtquellen 2 und zweiten LEDs 21, die rotes Licht direkt erzeugen können, kann der zweite Wellenlängenbereich besser im gut wahrnehmbaren roten Wellenlängenbereich unterhalb von 640 Nanometer gewählt werden. Dadurch kann für die im Folgenden beschriebenen optoelektronischen Vorrichtungen eine hohe Effizienz von mehr als 100 Lumen/Watt bei einem gleichzeitig hohen Farbwiedergabewert von mehr als 90 durch die Kombinationen der gezeigten weiß emittierenden ersten Halbleiterlichtquellen 1 und rot emittierenden zweiten Halbleiterlichtquellen 2 erreicht werden.

Alternativ zu den hier rein beispielhaft beschriebenen Kombinationen mit grünlichgelb bis weiß emittierenden ersten Halbleiterlichtquellen 1 und rot emittierenden zweiten Halbleiterlichtquellen 2 können aber auch jede andere Kombinationen von ersten und zweiten Halbleiterlichtquellen mit Emissionsspektren in anderen ersten und zweiten Wellenlängenbereichen verwendet werden, wenn ein anderer Farb- und Leuchteindruck des Mischlichts erwünscht ist. Allen denkbaren optoelektronischen Vorrichtungen gemäß der vorliegenden Beschreibung ist dabei das hier beschriebene Prinzip der Regelung und Stabilisierung des Farborts des abgestrahlten Mischlichts gemein, das von zumindest einer ersten und einer zweiten Halbleiterlichtquelle erzeugt wird.

Insbesondere können die im Folgenden beschriebenen Ausführungsbeispiele ganz allgemein zumindest eine erste und eine zweite Halbleiterlichtquelle für so genannte Multi-Farb-Systeme aufweisen, die zur Steigerung des Weißlichtqualität eine gute Regelbarkeit des Weißpunkts zulassen, so etwa optoelektronische Vorrichtungen, die ein Mischlicht mit einem zumindest einem ersten und einem zweiten oder auch mehr Wellenlängenbereichen abstrahlen, die jeweils einen blauen, weißen, orangefarbenen, roten und/oder tiefroten Leucht- und Farbeindruck hervorrufen.

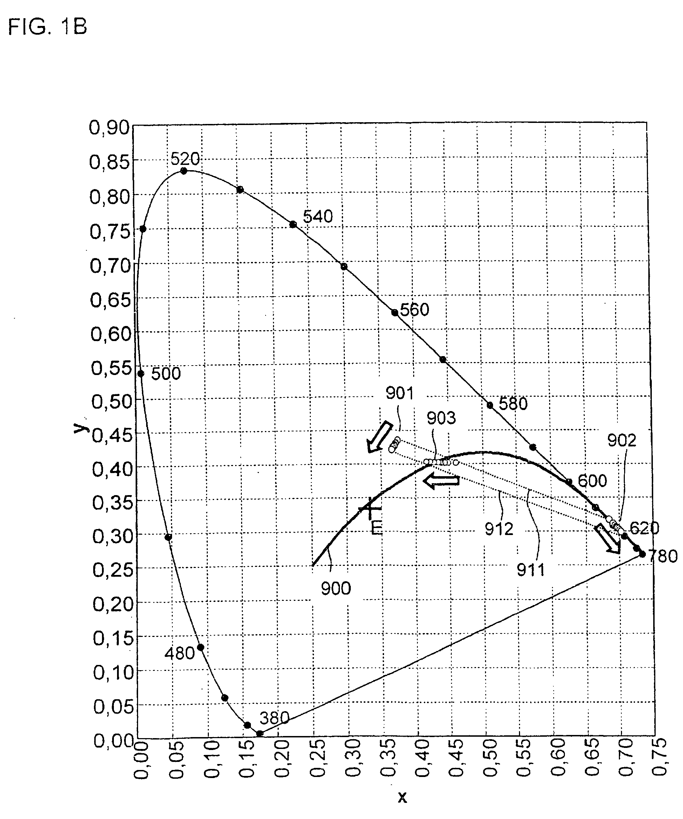

In Figur 1B ist eine dem Fachmann bekannte CIE-Normfarbtafel mit der Farbortkoordinate x auf der horizontalen Achse und der Farbortkoordinate y auf der vertikalen Achse gezeigt. Dabei kennzeichnet die Linie 900 die dem Fachmann bekannte so genannte Weißkurve eines planckschen Schwarzkörperstrahlers bei verschiedenen Temperaturen dieses. Diese Temperaturen werden auch als Farbtemperatur bezeichnet. Das Kreuz E bezeichnet den (mathematischen) Weißpunkt mit den Farbortkoordinaten x = y = 0,33, der in etwa einer Farbtemperatur von 5500 Kelvin entspricht.

Weiterhin sind in Figur 1B die Farborte 901 für die oben beschriebene erste LED 11 mit dem Emissionsspektrum im grünlich-weißen ersten Wellenlängenbereich für verschiedene Umgebungstemperaturen von 0°C bis 50°C gekennzeichnet. Durch den Pfeil neben den Farborten 901 ist die Farbortänderung für steigende Umgebungstemperaturen zwischen 0°C und 50°C angedeutet. Für die oben beschriebene zweite LED 21 mit dem Emissionsspektrum im roten zweiten Wellenlängenbereich sind die Farborte 902 im selben Temperaturbereich von 0°C bis 50°C eingezeichnet, wobei auch hier die Farbortänderung bei steigenden Umgebungstemperaturen durch den zugehörigen Pfeil angedeutet ist.

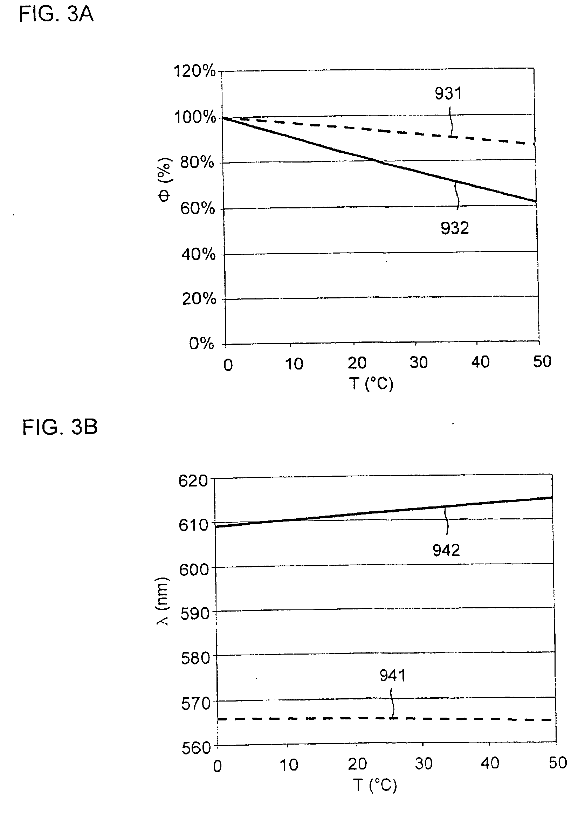

Zusätzlich zur Figur 1B sind in Figur 3A weiterhin die mit der Änderung der Umgebungstemperatur T in Grad Celsius einhergehenden Änderungen der ersten Intensität für die erste LED 11 mittels der Kurve 931 und der zweiten Intensität für die zweite LED 21 mittels der Kurve 932 in relativen Einheiten gezeigt, wobei hier jeweils ein gleich bleibender Betriebsstrom für die LEDs angenommen wurde. Die Änderung der ersten und zweiten charakteristischen Wellenlänge λ des ersten und zweiten Wellenlängenbereichs ist weiterhin in Figur 3B in Nanometer für die erste LED 11 durch Kurve 941 und für die zweite LED 21 durch die Kurve 942 in Abhängigkeit von der Umgebungstemperatur T in Grad Celsius gezeigt.

Aus den Figuren 3A und 3B ist zu erkennen, dass sich die zweite charakteristische Wellenlänge der zweiten, rot emittierenden LED 21 für steigende Umgebungstemperaturen zu größeren Wellenlängen λ hin verschiebt und das emittierte Licht gleichzeitig um etwa 40% an Intensität verliert. Im Vergleich dazu verschiebt sich die erste charakteristische Wellenlänge der ersten LED 11 zu etwas kürzeren Wellenlängen, was daran liegt, dass der Wellenlängenkonversionsstoff der ersten LED 11 bei höheren Temperaturen ineffizienter wird. Dadurch kann weniger konvertiertes Licht von der ersten LED abgestrahlt werden, so dass dadurch, dass der Anteil des konvertierten Lichts sinkt, ein bläulicherer Farbeindruck entsteht. Gleichzeitig verringert sich die abgestrahlte erste Intensität der ersten LED 11 um weniger als 20%. Im gezeigten Ausführungsbeispiel erweist sich somit die erste LED 11 im Vergleich zur zweiten LED 21 als temperaturstabiler und weist eine geringere erste Temperaturabhängigkeit der ersten charakteristischen Wellenlänge und der ersten Intensität im Vergleich zur zweiten Temperaturanhängigkeit der zweiten charakteristischen Wellenlänge und der zweiten Intensität auf.

Bei jeweils gleich bleibenden Betriebsströmen entsprechend einem vorgewählten Verhältnis des ersten Stroms zum zweiten Strom und einer ungeregelten Überlagerung des von der ersten LED 11 und der zweiten LED 21 emittierten Lichts mit den gezeigten ersten und zweiten Temperaturabhängigkeiten ergibt sich eine Temperaturabhängigkeit des resultierenden Mischlichts mit den Farborten 903 in Figur 1B in dem mittels der Linien 911 und 912 angedeuteten Bereich. Dabei ist zu erkennen, dass sich der Leuchteindruck des Mischlichts bei einer Erhöhung der Umgebungstemperatur von 0°C zu einer Umgebungstemperatur von 50°C zu höheren Farbtemperaturen beziehungsweise CCT verschiebt.

Noch nicht berücksichtigt sind hierbei zusätzlich auftretende Alterungseffekte der ersten und zweiten LEDs 11, 21, durch die es ebenfalls zu Veränderungen der jeweils abgestrahlten Intensität und der jeweiligen charakteristischen Wellenlänge und des jeweiligen Wellenlängenbereichs kommen kann. Insbesondere ist hier auch die so genannte Anfangsalterung zu berücksichtigen, die für verschiedene Chiptypen starke Schwankungen des Farborts des Mischlichts verursachen kann. Es sei außerdem darauf hingewiesen, dass sich die Farborte 903 des ungeregelten Mischlichts durch eine Änderung des vorgewählten Verhältnisses des ersten Stroms zum zweiten Strom im durch die Linien 911 und 912 angedeuteten Bereich verschieben lassen.

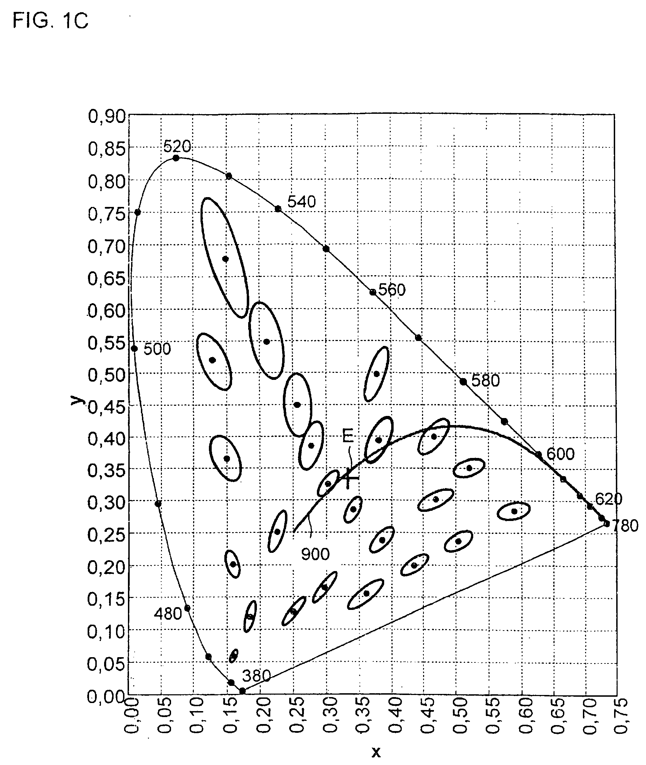

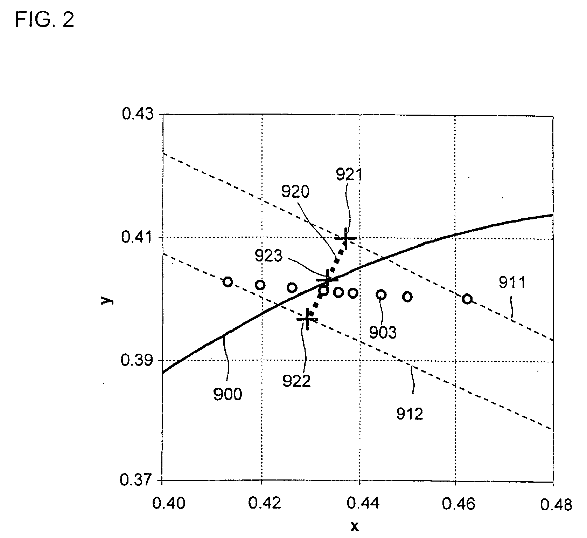

In Figur 2 ist ein Ausschnitt der CIE-Normfarbtafel aus Figur 1B im Bereich der Farbortkoordinate x zwischen 0,40 und 0,48 und im Bereich der Farbortkoordinate y zwischen 0,37 und 0,43 gezeigt, in dem die Temperaturabhängigkeit der Farborte 903 des ungeregelten Mischlichts deutlicher zu erkennen ist. Davon ausgehend liegt den folgenden Ausführungsbeispielen die Überlegung zugrunde, dass durch eine Regelung des Verhältnisses der ersten Intensität der ersten LED 11 zur zweiten Intensität der zweiten LED 21, bei denen hier und im Folgenden gleiche Temperaturen für alle LEDs angenommen werden, wegen der jeweiligen Temperaturabhängigkeit der ersten und zweiten charakteristischen Wellenlänge zwar keine Regelung auf einen einzigen Farbort 903 erreicht werden kann. Jedoch kann unter der Voraussetzung, dass die erste und zweite Halbleiterlichtquelle 1, 2 denselben Temperaturschwankungen unterworfen sind und besonders bevorzugt dieselbe Betriebstemperatur aufweisen, bei den im Folgenden beschriebenen optoelektronischen Vorrichtungen die Temperaturabhängigkeit der Farborte 903 minimiert werden, wenn die Regelung beispielsweise eine Farbortverschiebung entlang der Verbindungslinie 920 zwischen dem Farbort 921 bei einer Umgebungstemperatur von 0°C und dem Farbort 922 bei einer Umgebungstemperatur von 50°C bewirkt. Dabei ist die Verbindungslinie 920 so gewählt, dass sie senkrecht zu den Linien 911 und 921 liegt und daher rein mathematisch eine minimale Farbortverschiebung bedeutet. Weiterhin verläuft die Verbindungslinie 920 entlang der Hauptachse der MacAdams-Ellipse, die um den Mittelpunkt 923 der Verbindungslinie 920 herum liegt. Einige um das etwa Zehnfache vergrößerte MacAdams-Ellipsen sind zur Verdeutlichung in der CIE-Normfarbtafel in Figur 1C angedeutet. Durch eine Regelung entlang der Hauptachse einer MacAdams-Ellipse kann, wie im allgemeinen Teil ausgeführt, die Wahrnehmbarkeit der Farbortänderung der Farborte 903 des Mischlichts weiter minimiert werden. Die in Figur 2 dargestellte Verbindungslinie 920 ist dabei rein beispielhaft gezeigt. Alternativ dazu sind auch andere Verbindungslinien zwischen einem ersten Punkt auf der Linie 911 und einem zweiten Punkt auf der Linie 912 denkbar, um gewünschte Farbortabhängigkeiten des Mischlichts durch eine entsprechende Regelung und Kompensation der temperaturabhängigen Änderung der ersten und zweiten Intensität zu erreichen.

Um eine derart gewünschte Regelung des Mischlichts einer optoelektronischen Vorrichtung mit der vorab beschriebenen ersten und zweiten Halbleiterlichtquelle zu erreichen, ist somit eine möglichst einfache Realisierung gesucht, die sowohl den Temperaturabhängigkeiten der LEDs 11, 21 gemäß den Figuren 3A und 3B als auch der wellenlängenabhängigen spektralen Empfindlichkeit des menschlichen Auges gemäß der V_{λ}-Kurve aus Figur 1A Rechnung trägt.

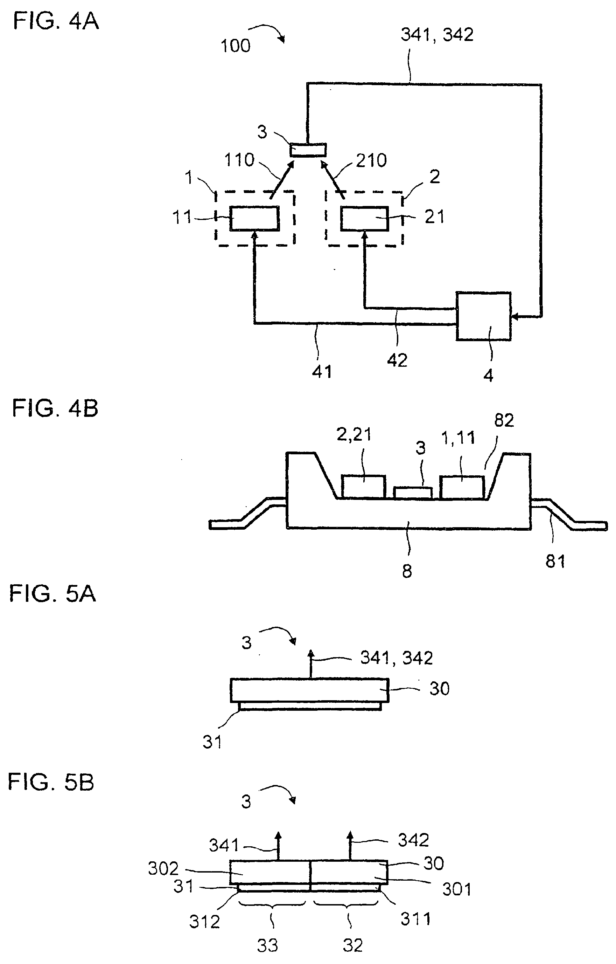

In Figur 4A ist dazu eine schematische Darstellung einer optoelektronischen Vorrichtung 100 gemäß einem Ausführungsbeispiel gezeigt, die eine erste Halbleiterlichtquelle 1 mit einer vorab beschriebenen ersten LED 11 und eine zweite Halbleiterlichtquelle 2 mit einer vorab beschriebenen zweiten LED 21 aufweist. Rein exemplarisch weisen die erste und zweite Halbleiterlichtquelle 1, 2 im gezeigten Ausführungsbeispiel jeweils genau eine erste beziehungsweise genau eine zweite LED 11, 21 auf. Alternativ dazu können die erste und/oder die zweite Halbleiterlichtquelle 1, 2 auch eine Mehrzahl von ersten beziehungsweise zweiten LEDs 11, 21 umfassen. Im Betrieb der optoelektronischen Vorrichtung 100 wird an die erste Halbleiterlichtquelle 1 ein erster Strom 41 und an die zweite Halbleiterlichtquelle 2 ein zweiter Strom 42 angelegt.

Die optoelektronische Vorrichtung 100 weist weiterhin einen optischen Sensor 3 auf, auf den ein Teil 110 des von der ersten Halbleiterlichtquelle 1 abgestrahlten Lichts und einen Teil 210 des von der zweiten Halbleiterlichtquelle 2 abgestrahlten Lichts eingestrahlt wird. Der optische Sensor 3 weist im ersten Wellenlängenbereich eine erste wellenlängenabhängige Sensitivität und im zweiten Wellenlängenbereich eine zweite wellenlängenabhängige Sensitivität auf. Die Teile 110, 210 des Lichts der ersten beziehungsweise zweiten Halbleiterlichtquelle 1, 2 werden vom optischen Sensor 3 in ein erstes und ein zweites Sensorsignal 341, 342 umgewandelt. Die jeweilige Signalstärke hängt aufgrund der ersten und zweiten wellenlängenabhängigen Sensitivität von den Wellenlängenbereichen beziehungsweise den charakteristischen Wellenlängen sowie von den Intensitäten der Teile 110, 210 des von den Halbleiterlichtquellen 1, 2 abgestrahlten Lichts ab. Durch die anfängliche Festelegung des Verhältnisses des ersten Stroms 41 zum zweiten Strom 42 beziehungsweise durch die Wahl des Verhältnisses des ersten Sensorsignals 341 zum zweiten Sensorsignal 342 kann der mittlere Farbort des Mischlichts unter vorgewählten Betriebsbedingungen eingestellt werden. Dabei kann der mittlere Farbort zusätzlich auch durch eine geeignete Anzahl an ersten LEDs 11 in der ersten Halbleiterlichtquelle 1.und/oder durch eine geeignete Anzahl an zweiten LEDs 21 in der zweiten Halbleiterlichtquelle 2 vorgewählt werden.

Weiterhin weist die optoelektronische Vorrichtung 100 eine Regelungsvorrichtung 4 auf, die den ersten und zweiten Strom 41, 42 derart regelt, dass das Verhältnis des ersten Sensorsignals 341 zum zweiten Sensorsignal 342 ein vorbestimmtes Verhältnis aufweist und beispielsweise konstant bleibt. Dazu weist die Regelungsvorrichtung 4 analoge und/oder digitale passive und aktive elektronische Bauelemente und Schaltungen auf, die beispielsweise auch in einem oder mehreren integrierten Schaltkreisen ausgebildet sein können. Derartige Regelschaltungen, die beispielsweise nach dem Prinzip von Proportionalreglern (P-Regler), beispielsweise auch mit zusätzlicher integrierender Regelung (PI-Regler) und/oder differenzieller Regelung (PD-Regelung, PID-Regelung), arbeiten, sind dem Fachmann bekannt und werden hier nicht weiter ausgeführt. Insbesondere kann die Regelungsvorrichtung 4 im gezeigten Ausführungsbeispiel auch als Stromtreiber für die ersten und zweite Halbleiterlichtquelle 1, 2 ausgeführt sein und den ersten und zweiten Strom 41, 42 direkt für die erste und zweite Halbleiterlichtquelle 1, 2 bereitstellen.

In Figur 4B ist ein Teil der optoelektronischen Vorrichtung gemäß dem vorherigen Ausführungsbeispiel gezeigt. Die erste Halbleiterlichtquelle 1, die zweite Halbleiterlichtquelle 2 und der optische Sensor 3 sind dabei in einem Gehäuse 8 angeordnet, das rein beispielhaft als oberflächenmontierbares Gehäuse ausgeführt ist. Das Gehäuse 8 weist einen Kunststoff auf, etwa Epoxid und/oder Silikon, und kann beispielsweise mittels eines Formprozesses wie im allgemeinen Teil beschrieben hergestellt werden. Weiterhin weist das Gehäuse 8 einen Leiterrahmen 81 zum elektrischen Anschluss beziehungsweise zur Kontaktierung der ersten und zweiten Halbleiterlichtquelle 1, 2 sowie des optischen Sensors 3 auf. Der Leiterrahmen 81 ist durch das Kunststoffmaterial des Gehäuses 8 umformt und weist eine geeignete Anschlusstopographie auf, um die Kontaktierung der im Gehäuse 8 angeordneten Komponenten zu ermöglichen (nicht gezeigt).

Die erste und zweite Halbleiterlichtquelle 1, 2 sowie der optische Sensor 3 sind in einer Vertiefung 82 des Gehäuses 8 angeordnet. Weiterhin kann in der Vertiefung 82 beispielsweise ein transparenter Kunststoffverguss zum Schutz der Halbleiterlichtquellen 1, 2 und des optischen Sensors 3 angeordnet sein (nicht gezeigt). Alternativ dazu können auch die Halbleiterlichtquellen 1, 2 und der optische Sensor 3 auf dem Leiterrahmen 81 montiert und anschließend mit dem Kunststoffmaterial des Gehäuses 8 umformt werden, wobei das Gehäuse 8 dann auch transparent und ohne Vertiefung 82 ausgeführt sein kann. Die in Figur 4A angedeuteten Teile 110, 210 des von der ersten und zweiten Halbleiterlichtquelle 1, 2 auf den optischen Sensor 3 eingestrahlten Lichts können in der gezeigten Anordnung jeweils ein Teil des von den ersten und zweiten LEDs 11, 21 seitlich, also parallel zur Montagebene, abgestrahlten Lichts umfassen.

Im gezeigten Ausführungsbeispiel stehen die erste und zweite Halbleiterlichtquelle 1 und 2 durch das Gehäuse 8 und den Leiterrahmen 81 in thermischem Kontakt. Das Gehäuse 8 und insbesondere der Leiterrahmen 81 wirken dabei als Wärmesenke, die eine gleichmäßige Temperaturverteilung der Halbleiterlichtquellen 1 und 2 erlauben. Dadurch ist es möglich, Selbsterwärmungseffekte in den Halbleiterlichtquellen 1 und 2 zu minimieren und die Halbleiterlichtquellen 1 und 2 möglichst den gleichen Temperaturen und Temperaturänderungen auszusetzen, um ein reproduzierbares Verhalten der optoelektronischen Vorrichtung 100 zu ermöglichen.

Die Anordnung der ersten und zweiten Halbleiterlichtquelle 1, 2 und des optischen Sensors 3 im Gehäuse 8 weist einen äußert kompakten Aufbau auf. Die Regelungsvorrichtung 4 kann in einem weiteren Gehäuse oder auch in Form einer integrierten Schaltung im Gehäuse 8 angeordnet werden. Dazu kann die Regelungsvorrichtung 4 beispielsweise auch zusammen mit dem Leiterrahmen 8 mit dem Gehäusematerial umformt werden.

Der optische Sensor 3 der optoelektronischen Vorrichtung 100 gemäß Figur 4A beziehungsweise gemäß Figur 4B umfasst im gezeigten Ausführungsbeispiel eine Silizium-Photodiode 30, wie im Detail in den Figuren 5A und 5B in zwei Ausführungsbeispielen gezeigt ist, wobei der Übersichtlichkeit halber beispielsweise elektrische Anschlüsse nicht dargestellt sind. Die erste und zweite Sensitivität des optischen Sensors 3 sind gemäß der obigen Ausführungen an die erste und zweite Temperaturabhängigkeit der ersten beziehungsweise zweiten Halbleiterlichtquelle 1, 2 angepasst. Dies kann durch eine geeignete Wahl des Sensormaterials der Photodiode 30 selbst erfolgen. Im gezeigten Ausführungsbeispiel wird jedoch eine Standard-Photodiode 30 mit einer aktiven Fläche von mindestens 300 Mikrometer mal 300 Mikrometer verwendet, wie sie etwa von Hamamatsu Photonics K.K. erhältlich ist und deren intrinsische Sensitivität im ersten und zweiten Wellenlängenbereich der Halbleiterlichtquellen 1, 2 nicht an die erste und zweite Temperaturabhängigkeit der ersten beziehungsweise zweiten Halbleiterlichtquelle 1, 2 angepasst ist.

Daher weist der optische Sensor 3 im Ausführungsbeispiel gemäß Figur 5A über der aktiven, lichtempfindlichen Fläche ein optisches Filter 31 auf, das eine Durchlässigkeit für Licht im ersten und zweiten Wellenlängenbereich aufweist, die zusammen mit der intrinsischen Sensitivität der Photodiode 30 die gewünschte erste und zweite wellenlängenabhängige Sensitivität ergibt. Die Teile 110, 210 des von der ersten beziehungsweise zweiten Halbleiterlichtquelle 1, 2 großflächig auf den optischen Sensor 3 eingestrahlten Lichts werden von der Photodiode 30 in ein elektrisches Signal umgewandelt. Um aus dem elektrischen Signal das erste und zweite Sensorsignal 341, 342 zu erhalten, werden der erste und zweite Strom 41, 42 mit zwei verschiedenen Frequenzen durch Ein- und Ausschalten der Ströme amplitudenmoduliert. Die Regelungsvorrichtung 4 weist zur Demodulation geeignete Frequenzmisch- und Filterschaltungen auf, die dem Fachmann bekannt sind und hier nicht weiter ausgeführt werden.

Alternativ oder zusätzlich dazu kann, wie in Figur 5B gezeigt, der optische Sensor 3 auch eine erste Sensorfacette 32 und eine zweite Sensorfacette 33 aufweisen, die optisch und elektrisch voneinander getrennt sind. Die elektrische Trennung kann beispielsweise durch ein Photodiodenarray oder eine strukturierte Photodiode 30 mit voneinander getrennten aktiven Bereichen 301 und 302 erfolgen. Die optische Trennung erfolgt im gezeigten Ausführungsbeispiel durch ein optisches Filter 31, das einen im ersten Wellenlängenbereich lichtdurchlässigen Bereich 311 und einen im zweiten Wellenlängenbereich lichtdurchlässigen Bereich 312 aufweist. Dadurch können der Teil 110 des Lichts mit dem ersten Wellenlängenbereich und der Teil 210 des Lichts mit dem zweiten Wellenlängenbereich durch das optische Filter 31 gegeneinander diskriminiert werden und die erste und zweite Sensorfacette 32, 33 können das erste und zweite Sensorsignal 341, 342 getrennt voneinander bereitstellen.

In den folgenden Figuren ist das Regelungsverhalten der optoelektronischen Vorrichtung 100 für verschiedene Beispiele und Ausführungsbeispiele von optischen Sensoren 3 mit verschiedenen ersten und zweiten wellenlängenabhängigen Sensitivitäten gezeigt. Dabei wurden die temperaturabhängigen Farbortänderungen des von der optoelektronischen Vorrichtung 100 abgestrahlten Mischlichts in Abhängigkeit von der Umgebungstemperatur untersucht, wobei zum Vergleich in den folgenden Ausschnitten der CIE-Normfarbtafel stets auch die temperaturabhängige Farbortänderung 903 der in Verbindung mit den Figuren 1B bis 3B erläuterten ungeregelten Überlagerung des Lichts der ersten und zweiten Halbleiterlichtquelle 1, 2 gezeigt ist. Insbesondere kennzeichnen die Pfeile die jeweils gezeigten Farbortverschiebungen bei einer Steigerung der Umgebungstemperatur von 0°C bis 60°C in mehreren Schritten von 5°C und 10°C.

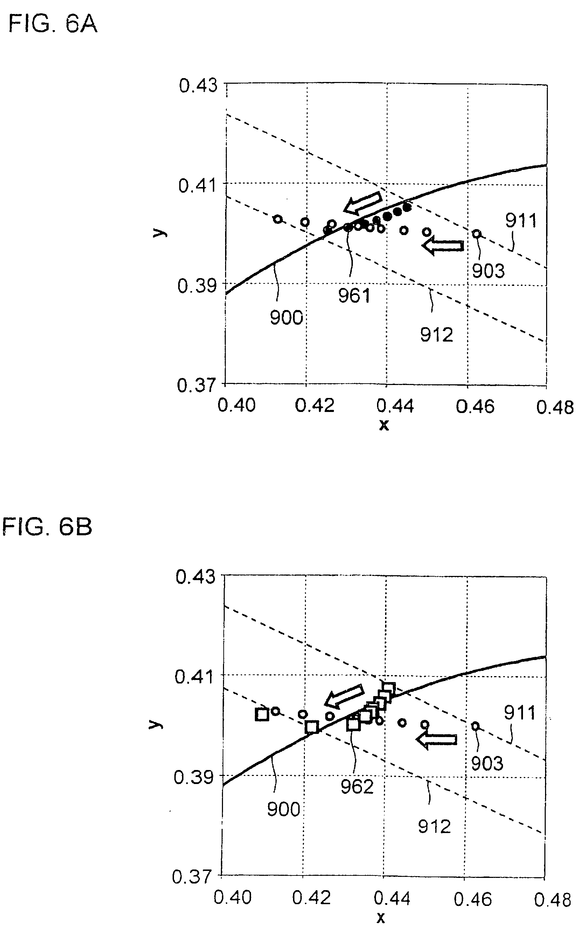

In den Figuren 6A und 6B ist das Regelungsverhalten der optoelektronischen Vorrichtung unter Verwendung von optischen Sensoren 3 gezeigt, die jeweils als kommerziell erhältliche Silizium-Photodioden ausgeführt (erhältlich beispielsweise von Hamamatsu Photonics K.K.) sind. In Figur 6A ist das Regelungsverhalten in Form der Farbortänderung 961 bei Verwendung einer Breitband-Photodiode gezeigt, die eine von etwa 300 Nanometer bis etwa 1000 Nanometer kontinuierlich ansteigende intrinsische Sensitivität aufweist, die dann für Wellenlängen über etwa 1000 Nanometer bis etwa 1100 Nanometer wieder rasch abfällt. In Figur 6B hingegen ist das Regelungsverhalten in Form der Farbortänderung 962 bei Verwendung einer so genannten VIS-Photodiode gezeigt, die ein Sensitivitätsmaximum bei etwa 550 Nanometer aufweist, das auf der kurzwelligen Seite bis etwa 300 Nanometer und auf der langwelligen Seite bis etwa 800 Nanometer rasch abfällt.

Beide Regelungsverhalten zeigen Farbortverschiebungen 961, 962, die im Wesentlichen entlang der Weißkurve 900 verlaufen. Im Vergleich zur mittels der Farborte 903 gezeigten ungeregelten Variante wird die Farbortverschiebung zwar teilweise kompensiert, jedoch nicht ausreichend, da vor allem die fallende Augenempfindlichkeit im roten, zweiten Wellenlängenbereich (siehe auch Figur 1A) nicht berücksichtigt wird und sich die erste charakteristische Wellenlänge der ersten Halbleiterlichtquelle 1 bei steigender Temperatur zu kürzeren Wellenlängen verschiebt, während sich die zweite charakteristische Wellenlänge der zweiten Halbleiterlichtquelle 2 wie oben beschrieben bei steigender Temperatur zu längeren Wellenlängen verschiebt. Die Verwendung herkömmlicher Silizium-Photodioden mit der vorab beschriebenen intrinsischen Sensitivität führt somit zu einem unzureichenden Regelungsverhalten.

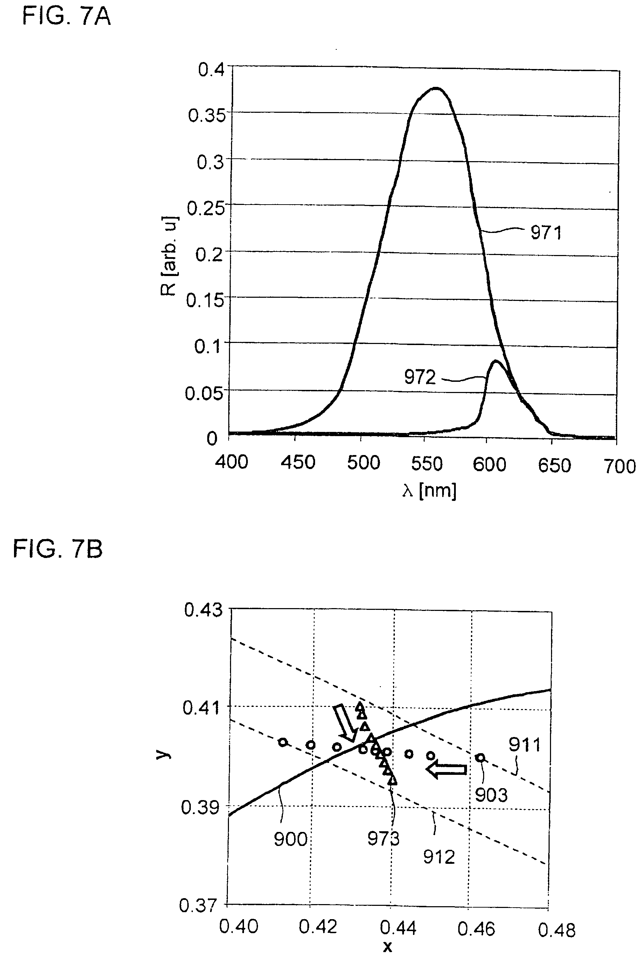

In Figur 7A ist die Sensitivität in Kurve 971 für einen optischen Sensor 3 gemäß Figur 5A gezeigt, der als so genannter Umgebungslichtdetektor ("ambient light detector", ALD) ausgeführt ist und der die wellenlängenabhängige Empfindlichkeit des menschlichen Auges nachbildet. Die Sensitivität beziehungsweise Empfindlichkeitskurve 971 entspricht somit der V_{λ}-Kurve 990 aus Figur 1A. Dazu weist der optische Sensor 3 ein geeignetes optisches Filter 31 auf, das in Kombination mit der intrinsischen Sensitivität der Silizium-Photodiode 30 die in Figur 7A gezeigte Sensitivität 971 aufweist. Die Empfindlichkeitskurve 972 zeigt die entsprechende Sensitivität der zweiten Sensorfacette 33 eines alternativen optischen Sensors 3 gemäß Figur 5B unter Verwendung eines optischen Filters 31 mit geeignetem Bereich 312.

In Figur 7B ist wie schon in den Figuren 6A und 6B das Regelungsverhalten der optoelektronischen Vorrichtung in Form der Farbortverschiebung 973 unter Verwendung derartiger optischer Sensoren 3. Durch die Sensitivität 971 beziehungsweise 972 des optischen Sensors kann somit ein Regelungsverhalten erreicht werden, das von dem der in den Figuren 6A und 6B gezeigten deutlich abweicht und das eine temperaturabhängige Regelung des Mischlichts nahezu senkrecht zur Weißkurve 900 ermöglicht.

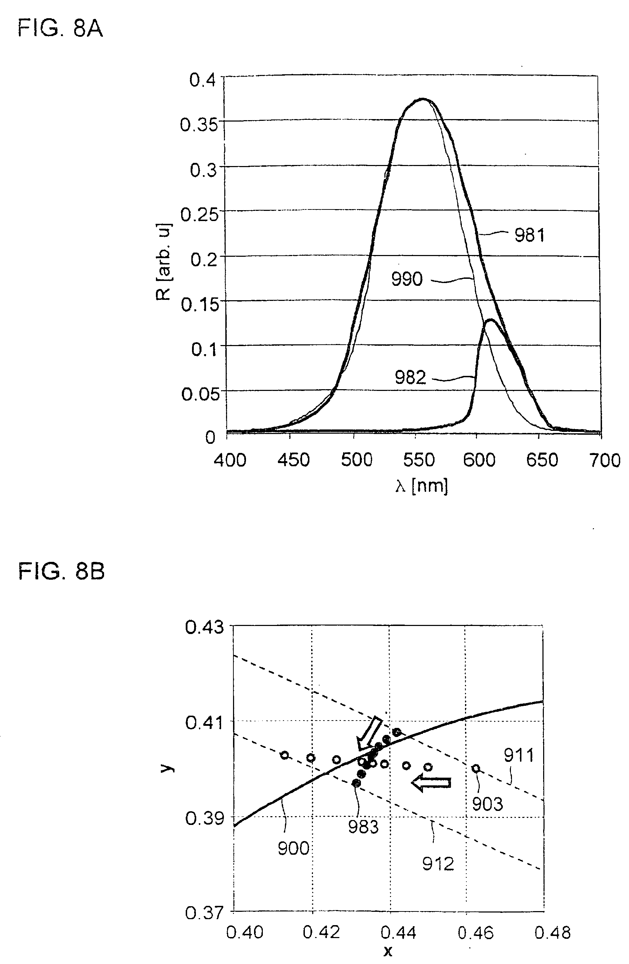

Hinsichtlich der obigen Erläuterungen zur Figur 2 zeigt sich in diesem Ausführungsbeispiel, dass die temperaturabhängige Farbortverschiebung des von der optoelektronischen Vorrichtung abgestrahlten Mischlichts überkompensiert wird. Um eine Regelungsverhalten der optoelektronischen Vorrichtung 100 mit einer minimal wahrnehmbaren temperaturabhängigen Farbortverschiebung des von der optoelektronischen Vorrichtung abgestrahlten Mischlichts zu erreichen, ist die Sensitivität eines geeigneten optischen Sensors 3 in Figur 8A gezeigt. Figur 8A zeigt eine im Vergleich zur V_{λ}-Kurve 990 modifizierte Sensitivität beziehungsweise Empfindlichkeitskurve 981 eines als ALD-Detektors ausgeführten optischen Sensors 3. Dieser weist im Bereich des roten, zweiten Wellenlängenbereichs der zweiten Halbleiterlichtquelle 2 eine zweite Sensitivität mit einer wellenlängenabhängigen Steigung auf, die verschieden von der wellenlängenabhängigen Steigung der V_{λ}-Kurve 990 im zweiten Wellenlängenbereich ist. Insbesondere fällt die Empfindlichkeitskurve 981 auf der langwelligen Seite langsamer als die V_{λ}-Kurve 990, so dass das Verhältnis der mittleren wellenlängenabhängigen Steigung der zweiten Sensitivität zur mittleren wellenlängenabhängigen Steigung der V_{λ}-Kurve 990 im zweiten Wellenlängenbereich von etwa 600 bis 650 Nanometer kleiner als 1 ist. Die Empfindlichkeitskurve 982 zeigt wiederum die zweite Sensitivität einer zweiten Sensorfacette 33 für einen optischen Sensor 3 gemäß Figur 5B. Figur 8B zeigt das Regelungsverhalten der optoelektronischen Vorrichtung 100 in Form der temperaturabhängigen Änderung der Farborte 983 des abgestrahlten Mischlichts unter Verwendung derartiger optischer Sensoren 3. Die Farborte 983 weisen dabei für eine mittlere Temperatur einen mittleren Farbort auf und liegen für sich ändernde Temperaturen entlang der Hauptachse der zu dem mittleren Farbort zugeordneten MacAdams-Ellipse. Im Hinblick auf die Ausführungen in Verbindung mit Figur 2 zeigt sich, dass durch einen optischen Sensor 3, bei dem die erste und zweite Sensitivität an das Temperaturverhalten der ersten und zweiten Halbleiterlichtquelle 1, 2 angepasst sind, eine einfache Regelung der ersten und zweiten Halbleiterlichtquelle 1, 2 möglich ist, so dass die gewünschte minimale temperaturabhängige Farbortverschiebung des von der optoelektronischen Vorrichtung abgestrahlten Mischlichts erreicht wird.

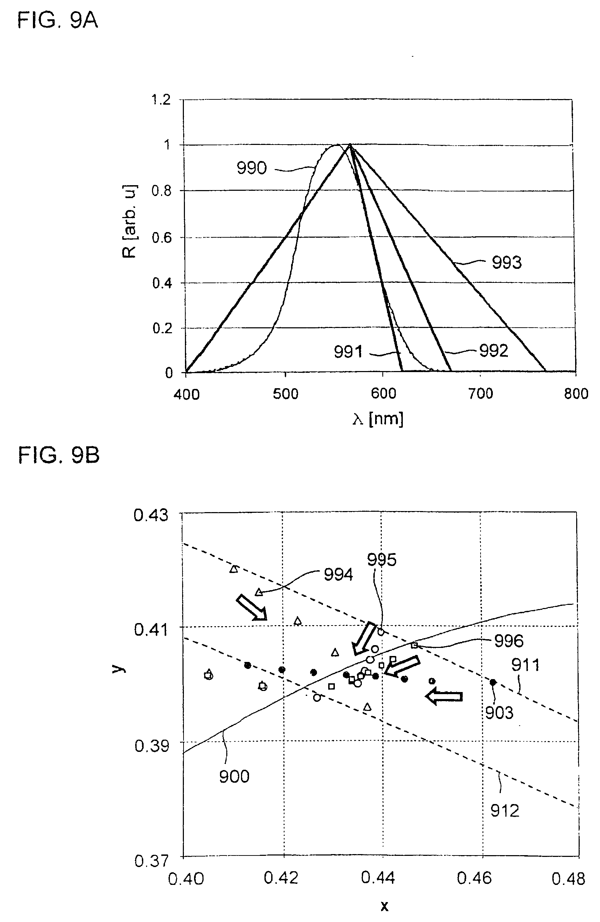

In den Figuren 9A bis 10B sind Simulationen zum Regelungsverhalten von optoelektronischen Vorrichtungen 100 in Form von temperaturanhängigen Farbortverschiebungen des abgestrahlten Mischlichts gezeigt, wobei die optoelektronischen Vorrichtungen 100 optische Sensoren 3 mit verschiedenen ersten und zweiten Sensitivitäten aufweisen. Dabei wurden im Vergleich zu den vorherigen Ausführungsbeispielen die gezeigten Sensitivitäten 991, 992, 993, 1001, 1002, 1003 des optischen Sensors 3 rein beispielhaft als Dreiecksfunktionen angenommen, die wie die ebenfalls gezeigte V_{λ}-Kurve 990 jeweils auf 1 normiert sind.

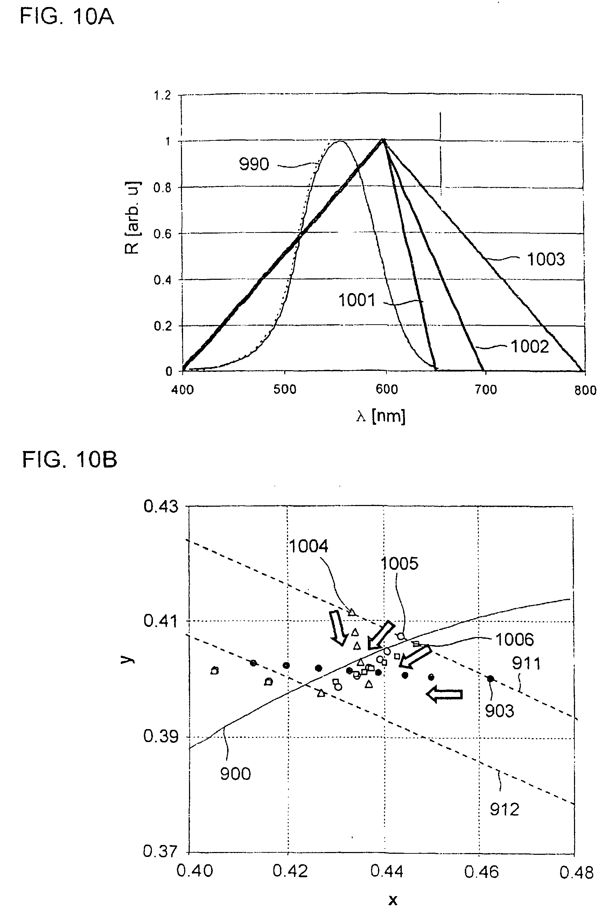

Die wellenlängenabhängigen Sensitivitäten 991, 992 und 993 in Figur 9A weisen eine maximale Empfindlichkeit von 1 bei 570 Nanometer auf, während die wellenlängenabhängigen Sensitivitäten 1001, 1002 und 1003 in Figur 10A eine maximale Empfindlichkeit von 1 bei 600 Nanometer aufweisen. Bei allen gezeigten Sensitivitäten beziehungsweise Empfindlichkeitskurven steigt die Empfindlichkeit des zugehörigen simulierten optischen Sensors 3 von 400 Nanometer bis zum Maximum linear an. Ausgehend von einer wellenlängenabhängig Steigung von -2%/nm der V_{λ}-Kurve für eine Wellenlänge von 600 Nanometer weisen die Sensitivitäten 991, 992 und 993 in Figur 9A beziehungsweise die Sensitivitäten 1001, 1002 und 1003 in Figur die Steigungen-2%/nm, -1%/nm und -0,5%/nm auf. Die Steigungen sind dabei als Prozentangabe normiert auf den Maximalwert hier und in Folgenden definiert. Die vorab genannten Steigungen entsprechen somit auch der jeweiligen wellenlängenabhängigen Steigung der zweiten wellenlängenabhängigen Sensitivität des optischen Sensors 3 im zweiten Wellenlängenbereich. Die aus den gezeigten Sensitivitäten resultierenden temperaturabhängigen Farbortverschiebungen des von den simulierten optoelektronischen Vorrichtungen abgestrahlten Mischlichts ist in den Figuren 9B und 10B gezeigt, wobei in Figur 9B den Farborten 994 (Dreiecke) die Sensitivität 991, den Farborten 995 (nicht-gefüllte Kreise) die Sensitivität 992 und den Farborten 996 (Quadrate) die Sensitivität 993 zugrunde liegen. In Figur 10B liegen den Farborten 1004 (Dreiecke) die Sensitivität 1001, den Farborten 1005 (nicht-gefüllte Kreise) die Sensitivität 1002 und den Farborten 1006 (Quadrate) die Sensitivität 1003 zugrunde. Die in den Figuren 9B und 10B gezeigten Farbort-"Ausreißer" bei hohen Temperaturen, die außerhalb des durch die Linien 911 und 912 angedeuteten Bereichs liegen, sind Artefakte der zugrunde liegenden Simulation, die dadurch bedingt sind, dass in der Simulation nur der zweite Strom zur Regelung eines konstanten Verhältnisses des ersten zum zweiten Sensorsignal 341, 342 bis zum einem angenommenen Maximalwert durch die Regelungsvorrichtung 4 nachgeregelt wurde.

Im Hinblick auf eine gewünschte minimale temperaturabhängige Farbortverschiebung des von der optoelektronischen Vorrichtung abgestrahlten Mischlichts geht aus beiden Figuren 9B und 10B hervor, dass bei einer wellenlängenabhängigen Steigung der zweiten Sensitivität von -0,5%/nm (Farborte 996 und 1006) und von -2%/nm (Farborte 994 und 1004) eine Unterbeziehungsweise Überkompensation erfolgt, wobei die Überkompensation im Wesentlichen dem in Verbindung mit den Figuren 7A und 7B gezeigten Regelungsverhalten im Falle von ersten und zweiten Sensitivitäten gemäß der V_{λ}-Kurve entspricht. Demgegenüber entsprechen die temperaturabhängigen Farbortverschiebungen der Farborte 995 in Figur 9B und der Farborte 1005 in Figur 10B am ehesten der in Figur 2 beschriebenen gewünschten Farbortverschiebung 920 entlang der Hauptachse der zugehörigen MacAdams-Ellipse. Die Verschiebung der Sensorempfindlichkeit ins Rote, also die Verschiebung des Maximums der Sensitivitäten von 570 Nanometer in Figur 9A auf 600 Nanometer in Figur 10 ergibt im Prinzip dieselbe Abhängigkeit, allerdings sinkt die Abhängigkeit der Qualität der Regelung von der wellenlängenabhängigen Steigung der zweiten Sensitivität etwas. Das kann bedeuten, dass eine rotverschobene Flanke stabilere Verhältnisse zur Folge hat, wenn beispielsweise die Steigung der spektralen Empfindlichkeit und insbesondere der zweiten Sensitivität der optischen Sensoren herstellungsbedingt gewissen Schwankungen unterliegen sollte.

Im Vergleich zu einer mittleren wellenlängenabhängigen Steigung von -1%/nm der bei 555 Nanometer auf 1 normierten V_{λ}-Kurve, ergibt sich damit für einen gemäß der Vorgaben nach Figur 2 optimierten optischen Sensor 3 im Wellenlängenbereich zwischen 600 und 650 Nanometer eine mittlere wellenlängenabhängige Steigung der zweiten Sensitivität von kleiner oder gleich -0,8%/nm, also 80% der entsprechenden mittleren Steigung der V_{λ}-Kurve, und größer oder gleich - 0,2%/nm, also 20% der entsprechenden mittleren Steigung der V_{λ}-Kurve, und besonders bevorzugt von etwa -0,5%/nm, also 50% der entsprechenden mittleren Steigung der V_{λ}-Kurve. Die spektralen Abhängigkeiten, die die jeweiligen zweiten Sensitivitäten im zweiten Wellenlängenbereich umfassen, sind ebenfalls als jeweils auf den Maximalwert zu 1 normiert zu betrachten. Da der detaillierte Verlauf unterhalb einer Wellenlänge von etwa 600 Nanometer einen geringeren Einfluss auf das Regelungsverhalten haben kann, könnten die betrachteten Spektren auch auf ihren Wert bei einer Wellenlänge von 600 Nanometer auf 1 normiert werden, wobei dann die genannten Steigungen mit einem Faktor 2,5 zu multiplizieren wären.

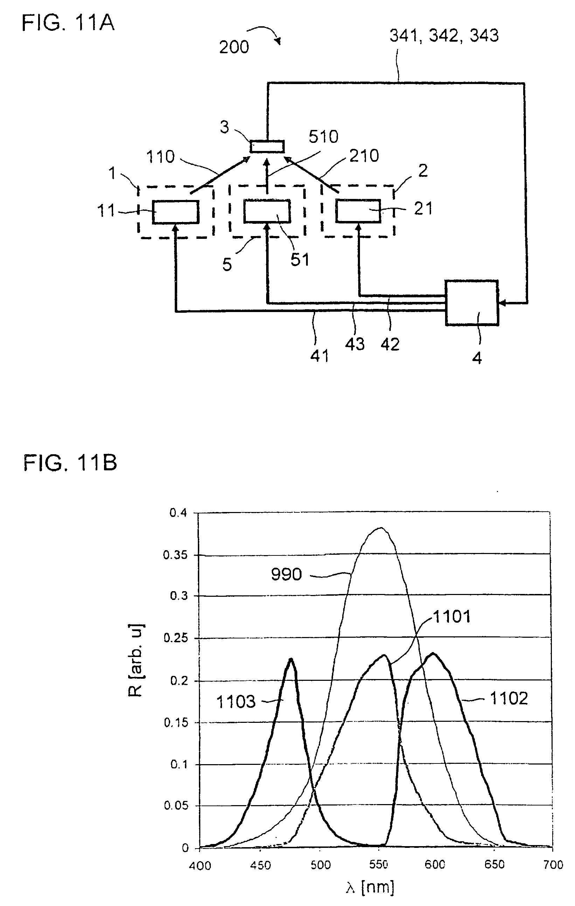

In Figur 11A ist eine optoelektronische Vorrichtung 200 gemäß einem weiteren Ausführungsbeispiel gezeigt, das eine Modifikation der optoelektronischen Vorrichtung 100 gemäß Figur 4A ist. Die optoelektronische Vorrichtung 200 weist im Vergleich zur optoelektronischen Vorrichtung 100 zusätzlich eine dritte Halbleiterlichtquelle 5 mit zumindest einer dritten LED 51 auf. Bei Anlegen eines dritten Stroms 43 emittiert im gezeigten Ausführungsbeispiel die zumindest eine dritte LED 51 und damit die dritte Halbleiterlichtquelle 5 Licht mit einer dritten charakteristischen Wellenlänge in einem dritten, blauen Wellenlängenbereich und mit einer dritten Intensität. Dadurch, dass der dritte Wellenlängenbereich verschieden vom ersten und zweiten Wellenlängenbereich ist, kann bei der optoelektronischen Vorrichtung 200 die vorab beschriebene temperaturabhängige Farbortänderung des von der optoelektronischen Vorrichtung abgestrahlten Mischlichts auf einen Farbort geregelt und stabilisiert werden.

Die dritte charakteristische Wellenlänge und die dritte Intensität weisen eine dritte Temperaturabhängigkeit und/oder Stromabhängigkeit und/oder Alterung auf, an die eine dritte Sensitivität des optoelektronischen Sensors 3 angepasst ist. Rein beispielhaft sind die erste, zweite und dritte Sensitivität 1101, 1102 und 1103 des optischen Sensors 3 sowie, zum Vergleich, die V_{λ}-Kurve 990 in Figur 11B gezeigt. Der optische Sensor 3 wandelt einen Teil 510 des von der dritten Halbleiterlichtquelle 5 abgestrahlten Lichts in ein drittes Sensorsignal 343 um. Die Regelvorrichtung 4 regelt den ersten, zweiten und dritten Strom 41, 42, 43 derart, dass das Verhältnis jeweils zweier des ersten, zweiten und dritten Sensorsignals 341, 342, 343 jeweils einem vorbestimmten Verhältnis entspricht, das entweder konstant ist oder sich in Abhängigkeit des ersten und/oder zweiten und/oder dritten Sensorsignals 341, 342, 343 auf vorbestimmte Weise ändert.

Durch die Wahl der Verhältnisse des ersten, zweiten und dritten Sensorsignals jeweils paarweise zueinander kann der Farbort des Mischlichts eingestellt werden. Im Falle der hier beschriebenen Wellenlängenbereiche und charakteristischen Wellenlängen ermöglicht die optoelektronische Vorrichtung 200 beispielsweise eine Einstellung des Farborts, auf den geregelt wird, entlang der Weißkurve der CIE-Normfarbtafel. Durch die gezielte Wahl der ersten, zweiten und dritten Sensitivität 1101, 1102, 1103 des optischen Sensors 3 wiederum können die erste, zweite und dritte Temperaturabhängigkeit der Halbleiterlichtquellen 1, 2 und 5 kompensiert werden, so dass keine temperaturabhängige oder alterungsabhängige Farbortverschiebung des von der optoelektronischen Vorrichtung 200 abgestrahlten Mischlichts mehr wahrnehmbar ist.

Aus den beschriebenen Ausführungsbeispielen wird deutlich, dass gerade durch eine geeignete Anpassung der ersten und zweiten beziehungsweise der ersten, zweiten und dritten Sensitivität des optischen Sensors 3 der optoelektronischen Vorrichtungen 100 und 200 ein geeignetes Regelungsverhalten erreicht werden kann, bei dem mittels der vom optischen Sensor 3 bereitgestellten Sensorsignale und einer Regelung auf konstante Sensorsignalverhältnisse durch Regelung des ersten, zweiten und gegebenenfalls dritten Stroms eine gewünschte Farbortstabilität des Mischlichts der optoelektronischen Vorrichtung 100 beziehungsweise 200 erreichbar ist. Dies ist dadurch möglich, dass bei den hier beschriebenen optoelektronischen Vorrichtungen 100 und 200 zur Regelung nicht nur die Intensitätsänderungen sondern auch die Wellenlängenänderungen des von den Halbleiterlichtquellen jeweils abgestrahlten Lichts direkt in geeignete Sensorsignale umgesetzt werden.

Verallgemeinert kann das Farbortstabilisierungsproblem bei sich verändernden spektralen Komponenten der Quellen durch angepasste spektrale Empfindlichkeiten im jeweiligen Spektralbereich der Quellen (z.B. durch ein oder mehrere Sensorfacetten) auf das Regeln, etwa das Konstanthalten, der Sensorsignalverhältnisse durch Regelung der Quellenströme reduziert werden.

Die Erfindung ist nicht durch die Beschreibung anhand der Ausführungsbeispiele auf diese beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

## Patentansprüche

1. Optoelektronische Vorrichtung zur Abstrahlung von Mischlicht mit Licht in zumindest einem ersten und einem zweiten Wellenlängenbereich, umfassend:
- eine erste Halbleiterlichtquelle (1) mit einer ersten lichtemittierenden Diode (11), die bei Anlegen eines ersten Stroms (41) Licht mit einer ersten charakteristischen Wellenlänge im ersten Wellenlängenbereich und mit einer ersten Intensität abstrahlt,
- eine zweite Halbleiterlichtquelle (2) mit einer zweiten lichtemittierenden Diode (21), die bei Anlegen eines zweiten Stroms (42) Licht mit einer zweiten charakteristischen Wellenlänge im zweiten Wellenlängenbereich und mit einer zweiten Intensität abstrahlt, wobei der erste und zweite Wellenlängenbereich voneinander verschiedene wellenlängenabhängige Intensitätsverteilungen aufweisen,
- einen optischen Sensor (3) zur Umwandlung eines Teils (110) des von der ersten Halbleiterlichtquelle (1) abgestrahlten Lichts in ein erstes Sensorsignal (341) und eines Teils (210) des von der zweiten Halbleiterlichtquelle (2) abgestrahlten Lichts in ein zweites Sensorsignal (342), und
- eine Regelungsvorrichtung (4) zur Regelung des ersten und zweiten Stroms (41, 42) in Abhängigkeit vom ersten und zweiten Sensorsignal (341, 342), wobei
- die erste charakteristische Wellenlänge und die erste Intensität des von der ersten Halbleiterlichtquelle (1) abgestrahlten Lichts eine erste Temperaturabhängigkeit (931, 941) aufweisen
- die zweite charakteristische Wellenlänge und die zweite Intensität des von der zweiten Halbleiterlichtquelle (2) abgestrahlten Lichts eine zweite Temperaturabhängigkeit (932, 942) aufweisen, die verschieden von der ersten Temperaturabhängigkeit (931, 941) ist,
- der optische Sensor (3) im ersten Wellenlängenbereich eine erste wellenlängenabhängige Sensitivität und im zweiten Wellenlängenbereich eine zweite wellenlängenabhängige Sensitivität aufweist, die an die erste und zweite Temperaturabhängigkeit (931, 932, 941, 942) angepasst sind, wobei der optische Sensor (3) zumindest ein optisches Filter (31) aufweist, das eine wellenlängenabhängige Durchlässigkeit zur Anpassung der ersten und zweiten Sensitivität aufweist,
- die Regelungsvorrichtung (4) den ersten und zweiten Strom (41, 42) derart regelt, dass das erste Sensorsignal (341) zum zweiten Sensorsignal (342) ein vorbestimmtes Verhältnis aufweist, so dass
- der Farbort des abgestrahlten Mischlichts geregelt und stabilisiert wird,
- die charakteristische zweite Wellenlänge im Bereich der fallenden Flanke der V_{λ}-Kurve (990) liegt,
- die charakteristische erste Wellenlänge im Bereich der steigenden Flanke oder des Maximums der der V_{λ}-Kurve (990) liegt,
- die zweite Sensitivität eine wellenlängenabhängige Steigung aufweist, die verschieden von der wellenlängenabhängigen Steigung der V_{λ}-Kurve (990) im zweiten Wellenlängenbereich ist,
- die zweite charakteristische Wellenlänge für steigende Temperaturen größer wird, und
- das Verhältnis der mittleren wellenlängenabhängigen Steigung der zweiten Sensitivität zur mittleren wellenlängenabhängigen Steigung der V_{λ}-Kurve (990) im zweiten Wellenlängenbereich größer oder gleich 0,2 und kleiner oder gleich 0,8 ist.

2. Optoelektronische Vorrichtung nach einem der vorherigen Ansprüche, wobei
der optische Sensor (3) eine erste Sensorfacette (32) aufweist, auf die der Teil (110) des Lichts im ersten Wellenlängenbereich eingestrahlt wird, und eine zweite Sensorfacette (33), auf die der Teil (210) des Lichts im zweiten Wellenlängenbereich eingestrahlt wird.

3. Optoelektronische Vorrichtung nach dem vorherigen Anspruch, wobei
die erste Sensorfacette (32) und die zweite Sensorfacette (33) optisch und elektrisch voneinander getrennt sind.

4. Optoelektronische Vorrichtung nach einem der vorherigen Ansprüche, wobei
der optische Sensor (3) eine Silizium-Photodiode (30) aufweist.

5. Optoelektronische Vorrichtung nach einem der vorherigen Ansprüche, wobei
der erste und/oder der zweite Strom (41, 42) im Betrieb moduliert wird.

6. Optoelektronische Vorrichtung nach dem vorherigen Aspruch, wobei
der erste und/oder zweite Strom (41, 42) durch Ein- und Ausschalten moduliert wird.

7. Optoelektronische Vorrichtung nach einem der vorherigen Ansprüche, wobei
- die optoelektronische Vorrichtung eine dritte Halbleiterlichtquelle (5) mit zumindest einer dritten lichtemittierenden Diode (51) aufweist, die bei Anlegen eines dritten Stroms (43) im Betrieb Licht mit einer dritten charakteristischen Wellenlänge in einem dritten Wellenlängenbereich und mit einer dritten Intensität aufweist,
- der dritte Wellenlängenbereich eine vom ersten und zweiten Wellenlängenbereich verschiedene wellenlängenabhängige Intensitätsverteilung aufweist und
- die dritte charakteristische Wellenlänge und die dritte Intensität eine dritte Temperaturabhängigkeit aufweist.

8. Optoelektronische Vorrichtung nach dem vorherigen Anspruch, wobei
- der optische Sensor (3) im dritten Wellenlängenbereich eine dritte wellenlängenabhängige Sensitivität aufweist, die an die dritte Temperaturabhängigkeit angepasst ist,
- der optische Sensor (3) einen Teil (510) des von der dritten Halbleiterlichtquelle (5) abgestrahlten Lichts in ein drittes Sensorsignal (343) umwandelt, und
- die Regelungsvorrichtung (4) den ersten, zweiten und dritten Strom derart regelt, dass jeweils zwei des ersten, zweiten und dritten Sensorsignals (341, 342, 343) ein vorbestimmtes Verhältnis aufweisen.

9. Optoelektronische Vorrichtung nach einem der vorherigen Ansprüche, wobei
- die optoelektronische Vorrichtung weiterhin ein Gehäuse (8) aufweist, in dem die erste und zweite Halbleiterlichtquelle (1, 2) und der optische Sensor (3) angeordnet sind.

10. Optoelektronische Vorrichtung nach einem der vorherigen Ansprüche, wobei
- das Mischlicht in einem Temperaturbereich von größer oder gleich 0°C und kleiner oder gleich 60°C eine temperaturabhängige Farbortverschiebung um einen mittleren Farbort aufweist, die entlang einer Hauptachse einer MacAdams-Ellipse um den mittleren Farbort herum verläuft.

## Claims

1. Optoelectronic device for emitting mixed light having light in at least one first and one second wavelength range, comprising:
- a first semiconductor light source (1) having a first light-emitting diode (11), which emits light having a first characteristic wavelength in the first wavelength range and having a first intensity when a first current (41) is applied,
- a second semiconductor light source (2) having a second light-emitting diode (21), which emits light having a second characteristic wavelength in the second wavelength range and having a second intensity when a second current (42) is applied, wherein the first and second wavelength ranges have mutually different wavelength-dependent intensity distributions,
- an optical sensor (3) for converting a part (110) of the light emitted by the first semiconductor light source (1) into a first sensor signal (341) and a part (210) of the light emitted by the second semiconductor light source (2) into a second sensor signal (342) and
- a control device (4) for controlling the first and second currents (41, 42) depending on the first and second sensor signals (341, 342), wherein
- the first characteristic wavelength and the first intensity of the light emitted by the first semiconductor light source (1) have a first temperature dependence (931, 941), and
- the second characteristic wavelength and the second intensity of the light emitted by the second semiconductor light source (2) have a second temperature dependence (932, 942), which is different from the first temperature dependence (931, 941),
- the optical sensor (3) has a first wavelength-dependent sensitivity in the first wavelength range and a second wavelength-dependent sensitivity in the second wavelength range, said wavelength-dependent sensitivities being adapted to the first and second temperature dependencies (931, 932, 941, 942), wherein the optical sensor (3) has at least one optical filter (31) having a wavelength-dependent transmission for adapting the first and second sensitivities,
- the control device (4) controls the first and second currents (41, 42) in such a way that the first sensor signal (341) has a predetermined ratio to the second sensor signal (342), such that
- the colour locus of the emitted mixed light is controlled and stabilized,
- the characteristic second wavelength is in the region of the falling edge of the Vλ curve (990),
- the characteristic first wavelength is in the region of the rising edge or of the maximum of the Vλ curve (990),
- the second sensitivity has a wavelength-dependent gradient that differs from the wavelength-dependent gradient of the Vλ curve (990) in the second wavelength range,
- the second characteristic wavelength becomes greater for increasing temperatures, and
- the ratio of the average wavelength-dependent gradient of the second sensitivity to the average wavelength-dependent gradient of the Vλ curve (990) in the second wavelength range is greater than or equal to 0.2 and less than or equal to 0.8.

2. Optoelectronic device according to any of the preceding claims, wherein
the optical sensor (3) has a first sensor facet (32), on which the part (110) of the light in the first wavelength range is incident, and a second sensor facet (33), on which the part (210) of the light in the second wavelength range is incident.

3. Optoelectronic device according to the preceding claim, wherein
the first sensor facet (32) and the second sensor facet (33) are optically and electrically isolated from one another.

4. Optoelectronic device according to any of the preceding claims, wherein
the optical sensor (3) has a silicon photodiode (30).

5. Optoelectronic device according to any of the preceding claims, wherein
the first and/or the second current (41, 42) are/is modulated during operation.

6. Optoelectronic device according to the preceding claim, wherein
the first and/or the second current (41, 42) are/is modulated by switching on and off.

7. Optoelectronic device according to any of the preceding claims, wherein
- the optoelectronic device comprises a third semiconductor light source (5) having at least one third light-emitting diode (51), which has light having a third characteristic wavelength in a third wavelength range and having a third intensity when a third current (43) is applied during operation,
- the third wavelength range has a wavelength-dependent intensity distribution different from the first and second wavelength ranges, and
- the third characteristic wavelength and the third intensity have a third temperature dependence.

8. Optoelectronic device according to the preceding claim, wherein
- the optical sensor (3) has a third wavelength-dependent sensitivity in the third wavelength range, said third wavelength-dependent sensitivity being adapted to the third temperature dependence,
- the optical sensor (3) converts a part (510) of the light emitted by the third semiconductor light source (5) into a third sensor signal (343), and
- the control device (4) controls the first, second and third currents in such a way that in each case two of the first, second and third sensor signals (341, 342, 343) have a predetermined ratio.

9. Optoelectronic device according to any of the preceding claims, wherein
- the optoelectronic device furthermore comprises a housing (8) in which the first and second semiconductor light sources (1, 2) and the optical sensor (3) are arranged.

10. Optoelectronic device according to any of the preceding claims, wherein
- the mixed light in a temperature range of greater than or equal to 0°C and less than or equal to 60°C has a temperature-dependent colour locus shift around an average colour locus that runs along a principal axis of a MacAdams ellipse around the average colour locus.

## Revendications

1. Dispositif optoélectronique destiné à émettre de la lumière combinée avec de la lumière dans au moins une première et une deuxième plage de longueurs d'onde, comprenant :
- une première source de lumière à semiconducteur (1) dotée d'une première diode électroluminescente (11) qui, lors de l'application d'un premier courant (41), émet de la lumière avec une première longueur d'onde caractéristique dans la première plage de longueurs d'onde et avec une première intensité,
- une deuxième source de lumière à semiconducteur (2) dotée d'une deuxième diode électroluminescente (21) qui, lors de l'application d'un deuxième courant (42), émet de la lumière avec une deuxième longueur d'onde caractéristique dans la deuxième plage de longueurs d'onde et avec une deuxième intensité, la première et la deuxième plage de longueurs d'onde possédant des distributions d'intensité dépendantes de la longueur d'onde différentes l'une de l'autre,
- un capteur optique (3) destiné à convertir une partie (110) de la lumière émise par la première source de lumière à semiconducteur (1) en un premier signal de capteur (341) et une partie (210) de la lumière émise par la deuxième source de lumière à semiconducteur (2) en un deuxième signal de capteur (342), et
- un dispositif de régulation (4) destiné à réguler le premier et le deuxième courant (41, 42) en fonction du premier et du deuxième signal de capteur (341, 342),
- la première longueur d'onde caractéristique et la première intensité de la lumière émise par la première source de lumière à semiconducteur (1) possèdent une première dépendance à la température (931, 941) et
- la deuxième longueur d'onde caractéristique et la deuxième intensité de la lumière émise par la deuxième source de lumière à semiconducteur (2) possèdent une deuxième dépendance à la température (932, 942) qui est différente de la première dépendance à la température (931, 941),
- le capteur optique (3) possède une première sensibilité dépendante de la longueur d'onde dans la première plage de longueurs d'onde et une deuxième sensibilité dépendante de la longueur d'onde dans la deuxième plage de longueurs d'onde, lesquelles sont adaptées à la première et à la deuxième dépendance à la température (931, 932, 941, 942) le capteur optique (3) possédant au moins un filtre optique (3), lequel présente une perméabilité dépendante de la longueur d'onde et sert à adapter la première et la deuxième sensibilité,
- le dispositif de régulation (4) régule le premier et le deuxième courant (41, 42) de telle sorte que le premier signal de capteur (341) présente un rapport prédéfini au deuxième signal de capteur (342), de sorte que
- la localisation chromatique de la lumière combinée émise est régulée et stabilisée,
- la deuxième longueur d'onde caractéristique se trouve dans la zone du front descendant de la courbe Vλ (990),
- la première longueur d'onde caractéristique se trouve dans la zone du front montant ou du maximum de la courbe Vλ (990),
- la deuxième sensibilité présente une pente dépendante de la longueur d'onde qui est différente de la pente dépendante de la longueur d'onde de la courbe Vλ (990) dans la deuxième plage de longueurs d'onde,
- la deuxième longueur d'onde caractéristique devient plus grande pour les températures croissantes, et
- le rapport entre la pente dépendante de la longueur d'onde moyenne de la deuxième sensibilité et la pente dépendante de la longueur d'onde moyenne de la courbe Vλ (990) dans la deuxième plage de longueurs d'onde est égale ou supérieure à 0,2 et inférieure ou égale à 0,8.

2. Dispositif optoélectronique selon l'une des revendications précédentes, avec lequel le capteur optique (3) possède une première facette de capteur (32) sur laquelle est irradiée la partie (110) de la lumière dans la première plage de longueurs d'onde, et une deuxième facette de capteur (33) sur laquelle est irradiée la partie (210) de la lumière dans la deuxième plage de longueurs d'onde.

3. Dispositif optoélectronique selon la revendication précédente, avec lequel la première facette de capteur (32) et la deuxième facette de capteur (33) sont séparées optiquement et électriquement l'une de l'autre.

4. Dispositif optoélectronique selon l'une des revendications précédentes, avec lequel le capteur optique (3) possède une photodiode au silicium (30).

5. Dispositif optoélectronique selon l'une des revendications précédentes, avec lequel le premier et/ou le deuxième courant (41, 42) est modulé en fonctionnement.

6. Dispositif optoélectronique selon la revendication précédente, avec lequel le premier et/ou le deuxième courant (41, 42) est modulé par mise en circuit et hors circuit.

7. Dispositif optoélectronique selon l'une des revendications précédentes, avec lequel
- le dispositif optoélectronique possède une troisième source de lumière à semiconducteur (5) dotée d'au moins une troisième diode électroluminescente (51) qui, lors de l'application d'un troisième courant (43) en fonctionnement, émet de la lumière avec une troisième longueur d'onde caractéristique dans une troisième plage de longueurs d'onde et avec une troisième intensité,
- la troisième plage de longueurs d'onde possède une distribution d'intensité dépendante de la longueur d'onde différente de la première et de la deuxième plage de longueurs d'onde, et
- la troisième longueur d'onde, caractéristique et la troisième intensité possédent une troisième dépendance à la température.

8. Dispositif optoélectronique selon la revendication précédente, avec lequel
- le capteur optique (3) possède dans la troisième plage de longueurs d'onde une troisième sensibilité dépendante de la longueur d'onde, laquelle est adaptée à la troisième dépendance à la température,
- le capteur optique (3) convertit une partie (510) de la lumière émise par la troisième source de lumière à semiconducteur (5) en un troisième signal de capteur (343), et
- le dispositif de régulation (4) régule le premier, le deuxième et le troisième courant de telle sorte que respectivement deux des premier, deuxième et troisième signaux de capteur (341, 342, 343) présentent un rapport prédéfini.

9. Dispositif optoélectronique selon l'une des revendications précédentes, avec lequel
- le dispositif optoélectronique possède en outre un boîtier (8) dans lequel sont disposés la première et la deuxième source de lumière à semiconducteur (1, 2) ainsi que le capteur optique (3).

10. Dispositif optoélectronique selon l'une des revendications précédentes, avec lequel
- la lumière combinée présente, dans une plage de températures entre 0 °C ou plus et 60 °C ou moins, un décalage de localisation chromatique dépendant de la température autour d'une localisation chromatique centrale qui s'étend le long d'un axe principal d'une ellipse de MacAdams autour de la localisation chromatique centrale.
